# EUROPÄISCHE PATENTSCHRIFT

(11) **EP 3 756 908 B1**
(45) Veröffentlichungstag und Bekanntmachung des Hinweises auf die Patenterteilung: **06.09.2023**
(21) Anmeldenummer: 20190629.4
(22) Anmeldetag: 11.03.2015
(51) Int. Cl.: B60C 23/00, B60C 23/10, B60C 23/14, F04B 39/02

(54) **DRUCKMITTELVERSORGUNGSEINRICHTUNG, RADEINHEIT MIT EINER DRUCKMITTELVERSORGUNGSEINRICHTUNG SOWIE VERTEILTES SYSTEM ZUR DRUCKMITTELVERSORGUNG**
PRESSURIZED-MEDIUM SUPPLY DEVICE, WHEEL UNIT HAVING A PRESSURIZED-MEDIUM SUPPLY DEVICE, AND DISTRIBUTED SYSTEM FOR SUPPLYING PRESSURIZED MEDIUM
SYSTÈME D'ALIMENTATION DE FLUIDE SOUS PRESSION, ENSEMBLE ROUE ÉQUIPÉ D'UN SYSTÈME D'ALIMENTATION DE FLUIDE SOUS PRESSION, AINSI QUE SYSTÈME RÉPARTI POUR L'ALIMENTATION DE FLUIDE SOUS PRESSION

(30) Priorität: 11.03.2014 DE 102014103217; 27.11.2014 DE 102014117459
(43) Veröffentlichungstag der Anmeldung: 30.12.2020
(62) Teilanmeldung aus: 15713657.3
(73) Patentinhaber: Illinois Tool Works Inc., Glenview, IL 60025 (US)
(72) Erfinder: TSIBERIDIS, Konstantin, 74076 Heilbronn (DE); GROSSE-VEHNE, Klemens, 71296 Heimsheim (DE)
(74) Vertreter: Meissner Bolte Partnerschaft mbB

(56) Entgegenhaltungen:
- DE-A1-102008 062 071
- DE-B- 1 145 741
- US-A- 1 424 123
- US-A- 5 928 444

## Beschreibung

Die Erfindung betrifft eine dezentrale integrierte Druckmittelversorgungseinrichtung, insbesondere zur Druckluftversorgung, für eine Radeinheit mit einem drehbar gelagerten Fahrzeugreifen. Die Erfindung betrifft ferner eine Radeinheit mit einer integrierten Druckmittelversorgungseinrichtung sowie ein verteiltes System zur Druckmittelversorgung, das eine Mehrzahl von Radeinheiten mit integrierten Druckmittelversorgungseinrichtungen aufweist.

DE 10 2008 062 071 A1 betrifft ein Reifendruckregelsystem für Fahrzeuge mit pneumatischen Reifen und ein Reifendruckregelverfahren. Das Reifendruckregelsystem weist zumindest einen Reifendrucksensor und ein Reifenventil auf. Zumindest ein Druckverteiler mit Schaltventilen wirkt mit einem Steuer- und Regelgerät zusammen. Dazu weist das Reifenventil ein Reifendrucksteuerventil und das Reifendruckregelsystem mehrere Kompressoren auf. Die Hochdruckkompressoren weisen elektrische Antriebe auf und sind mit den Antrieben radialsymmetrisch aufgebaut. Jeweils ein Hochdruckkompressor mit dem elektrischen Antrieb ist in mitrotierenden Radnaben der Räder angeordnet.

US 5,928,444 A betrifft ein batteriebetriebenes Reifendrucküberwachungs- und Aufblassystem, welches vollständig an oder in einem Fahrzeugrad montiert ist.

US 1,424,123 A betrifft eine Luftpumpe mit einem Gehäuse und einem darin drehbar gelagerten Exzenter.

Fahrzeugreifen werden üblicherweise mit Druckluft befüllt. Auch die Befüllung mit anderen Druckmedien ist denkbar, beispielsweise mit Stickstoff. Fahrzeugreifen im Sinne der vorliegenden Offenbarung können beispielsweise Schlauchreifen oder schlauchlose Reifen sein. Fahrzeugreifen kommen etwa bei Personenkraftwagen, Bussen, Nutzfahrzeugen, ferner jedoch beispielhaft auch bei Luftfahrzeugen zum Einsatz.

Herkömmliche Fahrzeugreifen werden üblicherweise über externe Anschlüsse mit einem Druckmittel versorgt, also etwa mit Druckluft bzw. mit einer Stickstofffüllung. Üblicherweise werden hierfür standardisierte Ventile verwendet. Fahrzeugreifen weisen üblicherweise einen - von den jeweiligen Einsatzbedingungen bzw. Betriebsbedingungen abhängigen - optimalen Betriebsdruck bzw. Befülldruck auf. So gibt es beispielsweise für Landfahrzeuge, also etwa für Pkw, Busse oder Lkw, Betriebsdrücke bzw. Druckbereiche, die möglichst ein Optimum aus Rollwiderstand, Seitenführung, Längsführung, Wärmeentwicklung und/oder Verschleißverhalten gewährleisten können.

Ein bestehender Ist-Druck in einem Reifen kann beispielsweise mit der Umgebungstemperatur bzw. der Betriebstemperatur in gewissen Grenzen schwanken. Ferner kann langfristig ein gewisser Druckverlust, etwa ein sogenannter schleichender Druckverlust, häufig nicht gänzlich vermieden werden. Es sind Systeme für Fahrzeuge bekannt, die eine Überwachung des Betriebsdrucks bzw. des Befülldrucks in Reifen erlauben. Hierbei kann es sich um sogenannte aktive oder passive Systeme handeln. Passive Systeme können beispielsweise darauf ausgerichtet sein, Abrollumfänge der Reifen einer Achse zu bestimmen und miteinander zu vergleichen. Sofern sich hierbei signifikante Unterschiede ergeben, spricht dies dafür, dass Druckunterschiede in den jeweiligen Reifen bestehen. Aktive Systeme zur Druckluftmessung und/oder Druckluftüberwachung umfassen üblicherweise Sensoren zur Druckerfassung, die in eine Radeinheit integriert sind. Derartige Drucksensoren können beispielsweise dazu ausgestaltet sein, entsprechende Drucksignale kabellos oder kabelgebunden aus dem (sich drehenden) Reifen an feststehende Komponenten des Fahrzeugs zu übermitteln.

Ferner sind grundsätzlich Systeme bekannt geworden, die eine autarke Anpassung des Fülldrucks von Fahrzeugreifen ermöglichen. Derartige Systeme sind beispielsweise bei Geländefahrzeugen, Militärfahrzeugen oder ähnlichen Spezialfahrzeugen anzutreffen. Die Systeme können grundsätzlich dazu ausgelegt sein, eine Anpassung des Befülldrucks im Stand zu ermöglichen, also dann, wenn sich das Fahrzeug nicht bewegt.

Bekannte Systeme zur autarken Druckregelung bei Fahrzeigen weisen eine zentrale Struktur auf. Dies heißt mit anderen Worten, es gibt lediglich eine Einrichtung zur Bereitstellung des Druckmittels zur Befüllung der Reifen. Es ist auch vorstellbar, einige wenige Einrichtungen zur Bereitstellung des Druckmittels vorzusehen, beispielsweise bei einer Kombination aus einer Zugmaschine und einem Anhänger bzw. Auflieger. Gleichwohl ist eine solche zentrale Bereitstellungseinrichtung für Druckluft dazu vorgesehen, eine Mehrzahl von Radeinheiten, insbesondere an verschiedenen Achsen, zu befüllen. Zu diesem Zweck muss die zentrale Druckluft- bzw. Druckmittelbereitstellungseinheit mit einer Mehrzahl von Radeinheiten gekoppelt werden. Üblicherweise wird also die Bereitstellungseinheit gestellseitig bzw. karosserieseitig oder aufbauseitig beim Fahrzeug angebracht. Die Bereitstellungseinheit kann beispielhaft einen Kompressor bzw. Druckluftkompressor umfassen. Ausgehend von der Bereitstellungseinheit ist es nun erforderlich, eine Mehrzahl bzw. eine Vielzahl von Druckluftleitungen oder Druckmittelleitungen zu den einzelnen Radeinheiten zu verlegen. Hierbei muss regelmäßig eine Mehrzahl sogenannter Drehdurchführungen für die Druckmittelleitungen bereitgestellt werden. Dies ist dadurch bedingt, dass die Reifen der Radeinheiten üblicherweise drehbar an Achsen des Fahrzeugs aufgenommen sind.

Demgemäß weisen zentrale Druckluftversorgungen für Fahrzeugreifen verschiedene Nachteile auf. Ein grundsätzlicher Nachteil besteht darin, dass sehr lange Leitungswege mit den Druckmittelleitungen zu überbrücken sind. Dies führt zu entsprechendem baulichen Aufwand, zu einem erhöhten Wartungsaufwand sowie zu einer erhöhten Gefahr für Undichtigkeiten. Eine Druckmittelbereitstellungseinheit der Druckluftversorgung muss ferner entsprechend dimensioniert werden und/oder geregelt werden, um sicherzustellen, dass die zum Befüllen der Reifen erforderlichen Volumenströme bzw. Drücke bereitgestellt werden können. Zentrale Druckluftversorgungen sind darüber hinaus relativ fehleranfällig, insbesondere für auf äußere Belastungen zurückzuführende Undichtigkeiten.

Die vorgenannten Aspekte führen zu einem erhöhten Realisierungsaufwand. Demgemäß gehen Reifendruckregelanlagen bei Fahrzeugen häufig mit einem hohen Einbauaufwand bzw. Nach rüstaufwand einher. Demgemäß ist die Verbreitung solcher Systeme sehr begrenzt.

Vor diesem Hintergrund liegt der Erfindung die Aufgabe zugrunde, eine Druckmittelversorgungseinrichtung für eine Radeinheit, eine Radeinheit mit einer Druckmittelversorgungseinrichtung, sowie ein System zur Druckmittelversorgung anzugeben, die mit deutlich geringerem Aufwand realisiert werden können. Möglichst soll eine Regelung und/oder Anpassung des Reifendrucks während der Fahrt, also auch bei sich drehenden Rädern erlaubt sein. Ferner soll möglichst ein Radwechsel bzw. ein Reifenwechsel ohne Mehraufwand erlaubt sein. Die Druckmittelversorgungseinrichtung soll sich insbesondere als Nachrüstlösung eignen. Es ist ferner bevorzugt, wenn die Druckmittelversorgungseinrichtung vorteilhaft auch zur Behebung von Reifenpannen herangezogen werden kann. Möglichst soll dabei in vielen Fällen eine Behebung oder eine vorläufige Behebung des Schadens ohne Montageaufwand vonstattengehen können.

Die Erfindung betrifft eine Druckmittelversorgungseinrichtung gemäß dem unabhängigen Patentanspruch 1, wobei vorteilhafte Weiterbildungen hiervon in den abhängigen Ansprüchen 2 bis 11 angegeben sind.

Demgemäß betrifft die Erfindung insbesondere eine dezentrale integrierte Druckmittelversorgungseinrichtung, insbesondere zur Druckluftversorgung, für eine Radeinheit mit einem drehbar gelagerten Fahrzeugreifen gelöst, mit einer dezentralen Verdichtereinheit, insbesondere einer elektromotorisch antreibbaren Verdichtereinheit, und einem Druckmittelpfad, der sich zwischen der dezentralen Verdichtereinheit und einem Felgenkörper des Fahrzeugreifens erstreckt, der einer Radkörperseite der Radeinheit zugeordnet ist, wobei die dezentrale Verdichtereinheit einen Energieversorgungsanschluss aufweist, der über einen Energieversorgungspfad versorgbar ist, der mit einer Energiebereitstellungseinheit koppelbar ist, wobei die Druckmittelversorgungseinrichtung zumindest abschnittsweise einer Trägerseite und der Radkörperseite der Radeinheit zugeordnet ist, und wobei zumindest der Druckmittelpfad oder der Energieversorgungspfad einen Dreh-Fest-Übergang, insbesondere eine Drehdurchführung, zwischen der Trägerseite und der Radkörperseite umfasst.

Pro Radeinheit kann eine Druckmittelversorgungseinrichtung vorgesehen sein, die baulich in die Radeinheit integriert ist. Die Druckmittelversorgungseinrichtung kann baulich zumindest teilweise bei der Radkörperseite der Radeinheit vorgesehen sein. Ferner kann die Druckmittelversorgungseinrichtung zumindest teilweise bei der Trägerseite der Radeinheit vorgesehen sein. Die Radkörperseite der Radeinheit ist die Seite, die relativ zur Trägerseite drehbar an dieser aufgenommen ist. Demgemäß kann die Trägerseite beispielhaft einen Achskörper umfassen. Die Radkörperseite kann eine Nabe bzw. einen Nabenkörper mit einer Radaufnahme, eine Felge sowie einen Reifen umfassen. Die Radkörperseite und die Trägerseite können über ein Radlager miteinander gekoppelt sein.

Die dezentrale integrierte Versorgungsmitteleinrichtung erlaubt insbesondere eine "Verkürzung" des Druckmittelpfads, also eine Verkürzung von Druckmittelleitungen. Sofern überhaupt eine Kommunikation bzw. ein Austausch mit zentralen Komponenten des Fahrzeugs erforderlich ist, kann dies beispielhaft über elektrische Leitungen erfolgen. Sofern vorrangig Informationen ausgetauscht werden, ist auch eine drahtlose Kommunikation zwischen der Druckmittelversorgungseinrichtung und zentralen Komponenten des Fahrzeugs vorstellbar. Auf diese Weise kann auf (körperliche) Leitungen verzichtet werden.

Selbst dann, wenn die Kommunikation mit zentralen Komponenten des Fahrzeugs über elektrische Leiter erfolgt, kann die Robustheit einer Anlage zur Druckluftüberwachung bzw. Druckluftanpassung deutlich verbessert werden. Insbesondere die Leckanfälligkeit bzw. Die Anfälligkeit für Undichtigkeiten beim Druckmittelpfad kann verringert werden. Bei zentralen Systemen zur Druckluftversorgung ist es erforderlich, Druckluftleitungen netzartig bzw. sternartig im Bereich eines Fahrgestells des Fahrzeugs vorzusehen. Dieser Bereich ist jedoch besonders exponiert und potenziell schädlichen Umgebungsbedingungen ausgesetzt. Es ist daher von Vorteil, auf einen Großteil der erforderlichen Leitungen (Druckluftleitungen) verzichten zu können.

Die dezentrale Verdichtereinheit weist einen Kompressor auf. Ferner weist die dezentrale Verdichtereinheit einen Motor zum Antrieb des Kompressors auf. Grundsätzlich kann der dezentralen Verdichtereinheit auch eine Puffereinheit zugeordnet sein, die beispielsweise (elektrische) Energie für eine begrenzte Betriebsdauer bereitstellt.

Der Dreh-Fest-Übergang zwischen der Trägerseite und der Radkörperseite kann einerseits beim Druckmittelpfad vorgesehen sein. Der Dreh-Fest-Übergang kann jedoch grundsätzlich auch beim Energieversorgungspfad vorgesehen sein. Der Energieversorgungspfad ist insbesondere zur Bereitstellung elektrischer Energie ausgebildet.

Die Verdichtereinheit kann an verschiedenen Vorzugspositionen angebracht bzw. befestigt werden. Dies kann einerseits auf der Trägerseite beispielsweise einen Achskörper betreffen. Demgemäß wäre der Dreh-Fest-Übergang im Druckmittelpfad angeordnet. Die Verdichtereinheit kann jedoch auch radkörperseitig angeordnet sein und beispielsweise im Bereich einer Radnabe (also nicht unbedingt am Rad selbst) oder im Bereich einer Felge des Rads angeordnet sein. In diesem Fall kann der Dreh-Fest-Übergang im Energieversorgungspfad ausgebildet sein.

Es sind grundsätzlich auch Ausgestaltungen denkbar, bei denen die Verdichtereinheit derart an der Radkörperseite, etwa bei einer Felge, angeordnet ist, dass der Reifen direkt beströmt werden kann. Mit anderen Worten kann die Verdichtereinheit "im" Reifen ausgebildet sein. Bei einer solchen Gestaltung ist der Druckmittelpfad insbesondere zur Ansaugung des Druckmittels ausgebildet.

Üblicherweise kann der Fahrzeugreifen über ein Verschlussventil mit Druckluft befüllt werden. Hierbei kann es sich etwa um ein herkömmliches Ventil handeln, das in gewohnter Weise (auch extern) aktiviert und befüllt werden kann. Die Druckmittelversorgungseinrichtung kann grundsätzlich derart gestaltet sein, dass die Verdichtereinheit auf ein solches Verschlussventil einwirkt. Die Druckmittelversorgungseinrichtung kann jedoch auch derart gestaltet sein, dass die Verdichtereinheit parallel zum Verschlussventil auf den Reifen einwirken kann.

Bei dem Druckmittelpfad kann es sich insbesondere um eine Druckmittelleitung, einen Druckmittelkanal oder Ähnliches handeln. Energie zum Antrieb der Verdichtereinheit kann als elektrische Energie, ferner jedoch auch als mechanische Energie oder in ähnlicher Weise bereitgestellt werden.

Gemäß der Erfindung weist die Verdichtereinheit einen Kompressor und einen Motor auf, die insbesondere in ein gemeinsames Gehäuse integriert sind. Es kann ferner von Vorteil sein, wenn auch eine Puffereinheit, also etwa eine Akkumulatoreinheit oder eine Kondensatoreinheit, bei der Verdichtereinheit vorgesehen ist. Auch die Puffereinheit kann in das gemeinsame Gehäuse integriert sein. Demgemäß kann die Verdichtereinheit eine kompakte, patronenartige Bauform aufweisen, wobei die Komponenten vor äußeren Einflüssen geschützt werden können.

Grundsätzlich kann er Kompressor der Verdichtereinheit auch als mechanisch antreibbarer Kompressor ausgestaltet sein. Eine solche Gestaltung kann beinhalten, dass der Kompressor bei Bedarf mechanisch aktiviert und angetrieben wird. Es ist vorstellbar, hierfür die kinetische Energie des sich drehenden Rades bzw. Reifens (relativ zur Trägerseite) zu nutzen.

Gemäß einer weiteren Ausgestaltung ist der Dreh-Fest-Übergang im Druckmittelpfad ausgebildet. Demgemäß ist die Verdichtereinheit an der Trägerseite festgelegt. Die Verdichtereinheit kann am Achskörper angeordnet sein. Die Verdichtereinheit kann insbesondere im Achskörper angeordnet sein. Dies kann einen verbesserten Schutz der Verdichtereinheit vor Umwelteinflüssen bewirken. Der Achskörper kann eine Achse definieren, um die sich das am Achskörper drehbar aufgenommene Rad mit der Felge und dem Reifen drehen kann. Die Verdichtereinheit kann koaxial zu dieser Achse aufgenommen sein. Die Verdichtereinheit kann grundsätzlich auch parallel versetzt bzw. windschief zu dieser Achse am Achskörper angeordnet sein.

Gemäß einer weiteren Ausgestaltung umfasst der Dreh-Fest-Übergang im Druckmittelpfad eine fluidische Drehdurchführung.

Gemäß einer weiteren Ausgestaltung ist der Dreh-Fest-Übergang zwischen einem aktivierten Zustand und einem deaktivierten Zustand umschaltbar, wobei sich insbesondere im aktivierten Zustand ein Kontakt zwischen einer feststehenden Komponente und einer rotierbaren Komponente des Dreh-Fest-Übergangs ergibt. Demgemäß können die feststehende Komponente und die rotierbare Komponente derart angesteuert werden, dass sich zwischen diesen nur dann ein Eingriff ergibt, wenn Bedarf zur Druckregelung besteht. Zum Umschalten zwischen dem aktiven und dem inaktiven Zustand kann beispielsweise ein Aktor angesteuert werden.

Gemäß einer weiteren Ausgestaltung ist der Dreh-Fest-Übergang in Abhängigkeit von einem anliegenden Druck des Druckmittels schaltbar. Mit anderen Worten kann dem Dreh-Fest-Übergang ein druckgesteuertes Ventil zugeordnet werden. Das Ventil kann also einerseits durch den Druck des anliegenden Fluids geschaltet werden, wobei im geschalteten (aktiven) Zustand das Fluid das Ventil durchströmen kann. Beispielhaft kann eine feststehende Komponente des Ventils, die mit dem Achskörper gekoppelt ist, einen ausfahrbaren, axial durchströmbaren Kolben umfassen. Der Kolben kann zwar einerseits axial durchströmbar sein, ferner jedoch eine Stirnfläche umfassen, über die das Druckmittel auf diesen einwirken kann. Das Ventil kann in geeigneter Weise ausgelegt werden, so dass ein anliegender Druck ausreicht, um den Kolben auszufahren und somit einen Kontakt mit der rotierbaren Komponente herstellen.

Gemäß einer weiteren Ausgestaltung ist der Dreh-Fest-Übergang koaxial zu einer Radachse der Radeinheit angeordnet.

Gemäß einer weiteren Ausgestaltung ist der Dreh-Fest-Übergang außermittig insbesondere exzentrisch zu einer Radachse der Radeinheit angeordnet. Diese Gestaltung kann beinhalten, dass ein trägerseitiger Abschnitt des Druckmittelpfads radial von der Radachse weggeführt wird und mit einem Abstand zur Radachse in einen Ringspalt oder ein ähnliches Element mündet, das der Radkörperseite zugeordnet ist. Bei dem Ringspalt kann es sich grundsätzlich um einen separat an der Radkörperseite vorgesehenen Ringspalt handeln. Es ist jedoch auch vorstellbar, einen vorhandenen Ringspalt zu nutzen, der einem Übergang zwischen der Radkörperseite und der Trägerseite zugeordnet ist. Beispielhaft kann es sich dabei um den Radlagerspalt handeln. Vorstellbar ist, beim Radlagerspalt Wellendichtringe vorzubringen, die diesen druckdicht abschließen. Die Wellendichtringe können derart modifiziert werden, dass der Druckmittelpfad an einem feststehenden Dichtring in den Radlagerspalt mündet und den Radlagerspalt an seinem Außenumfang etwa über eine Bohrung verlässt.

Gemäß einer weiteren Ausgestaltung ist der Dreh-Fest-Übergang im Energieversorgungspfad ausgebildet, wobei die Verdichtereinheit zumindest abschnittsweise an der Radkörperseite festgelegt ist.

Wie vorstehend erwähnt, weist die Verdichtereinheit einen Kompressor, einen Antrieb und ggf. eine Puffereinheit auf. Gemäß dieser Ausgestaltung kann sich die Verdichtereinheit gemeinsam mit der Radkörperseite relativ zur Trägerseite verdrehen. Diese Gestaltung hat den Vorteil, dass der Dreh-Fest-Übergang eben nicht im Druckmittelpfad angeordnet sein muss. Auf diese Weise kann die Dichtheit im Druckmittelpfad noch besser gewährleistet werden. Der Aufwand zur Bereitstellung der Druckmittelversorgungseinrichtung kann weiter reduziert werden.

Diese Ausgestaltung kann dadurch weitergebildet sein, dass der Dreh-Fest-Übergang im Energieversorgungspfad zumindest einen Schleifringkontakt umfasst. Auf diese Weise kann die elektrische Kontaktierung über den Dreh-Fest-Übergang besonders einfach bereitgestellt werden.

Gemäß einer weiteren Ausgestaltung weist der Dreh-Fest-Übergang für den Energieversorgungspfad zumindest eine selektiv aktivierbare Kontakteinheit auf, die zwischen einer Kontaktstellung und einer Nicht-Kontaktstellung verlagerbar ist, um in der Kontaktstellung zumindest einen ringförmigen oder scheibenförmigen Kontaktabschnitt zu kontaktieren, wobei die zumindest eine Kontakteinheit der Trägerseite und der zumindest eine Kontaktabschnitt der Radkörperseite zugeordnet ist. Dies hat den Vorteil, dass nur dann tatsächlich ein Kontakt besteht, wenn Energie übertragen werden soll. Auf diese Weise lässt sich der Verschleiß deutlich reduzieren.

Gemäß einer Weiterbildung dieser Ausgestaltung umfasst die zumindest eine Kontakteinheit einen Aktuator, der aktivierbar ist, wenn die Kontakteinheit zu Energieübertragungszwecken bestromt wird. Der Aktuator kann etwa als Magnetaktor oder als elektromotorischer Aktor gestaltet sein. Vorzugweise erfolgt die Aktivierung des Aktuators durch das Bestromen des Energieversorgungspfads. Dies hat den Vorteil, dass keine separaten Leitungen zum Aktivieren erforderlich sind.

Gemäß einer weiteren Ausgestaltung sind radkörperseitig zwei axial voneinander beabstandete Kontaktabschnitte vorgesehen, die entgegengesetzte Pole bilden, wobei die Kontakteinheit einen Kontaktkörper umfasst, der eine entsprechende Polarisierung aufweist und radial in einen Zwischenraum zwischen den Kontaktabschnitten einfahrbar ist, um beide zu kontaktieren. Auf diese Weise kann eine erforderliche Anpresskraft einfach bewirkt werden. Der Aktuator bracht grundsätzlich nur eine einfache geradlinige Einfahr- und Ausfahrbewegung vollziehen. Am Kontaktkörper können Anlageflächen ausgebildet sein, die die entsprechenden Pole bilden.

Gemäß noch einer weiteren Ausgestaltung ist radkörperseitig ein Kontaktabschnitt vorgesehen, der mit voneinander abgewandten Kontaktflächen versehen ist, die entgegengesetzte Pole bilden, wobei die Kontakteinheit zwei voneinander beabstandete Kontaktkörper aufweist, die den Kontaktflächen zugeordnete Pole bilden, wobei die Kontaktkörper radial oder axial auf den Kontaktabschnitt zuführbar sind, um diesen zwischen sich aufzunehmen, und um die Kontaktflächen zu kontaktieren.

Gemäß einer alternativen Ausgestaltung ist der Dreh-Fest-Übergang in den Energieversorgungspfad als Übergang zur kontaktlosen Energieübertragung ausgestaltet.

Insbesondere kann der Dreh-Fest-Übergang im Energieversorgungspfad zur Übertragung elektrischer Energie ausgestaltet sein. Elektrische Energie kann beispielhaft induktiv, kapazitiv oder elektromagnetisch übertragen werden.

Es ist grundsätzlich vorstellbar, den Dreh-Fest-Übergang beispielhaft bei einem Spalt oder Luftspalt zwischen einem Stator und einem Rotor einer elektrischen Maschine für die Verdichtereinheit vorzusehen. Auf diese Weise könnte gewissermaßen der Motor selbst den Dreh-Fest-Übergang bereitstellen. Gemäß dieser Ausgestaltung kann etwa kinetische Energie der Radkörperseite beim Fahren genutzt werden, um die Verdichtereinheit anzutreiben.

Es ist jedoch auch vorstellbar, den Energieversorgungspfad als kontaktlosen Leiter zur Energieübertragung auszugestalten. Die Energie kann induktiv, kapazitiv und/oder elektromagnetisch übertragen werden. Es ist vorstellbar, beim Dreh-Fest-Übergang ein gleichgerichtetes Energiesignal in ein wechselgerichtetes Energiesignal umzuwandeln, oder umgekehrt. Es ist jedoch auch vorstellbar, die Art des Signals (gleichgerichtet oder wechselgerichtet) beim Dreh-Fest-Übergang beizubehalten.

Gemäß einer weiteren Ausgestaltung ist der Dreh-Fest-Übergang dem Energieversorgungspfad zur Wandlung elektrischer Energie in mechanische Energie ausgebildet. Beispielhaft kann hierbei kinetische Energie der Radkörperseite in elektrische Energie umgewandelt werden. Mit anderen Worten kann der Dreh-Fest-Übergang einen Stator und einen Rotor fassen, die generatorisch miteinander zusammenwirken.

Gemäß einer weiteren Ausgestaltung ist der Dreh-Fest-Übergang im Energieversorgungspfad zur Wandlung mechanischer Energie in fluidische Energie ausgebildet. Auch diese Gestaltung kann von einer Relativbewegung, insbesondere einer Relativrotation zwischen der Radkörperseite und der Trägerseite Gebrauch machen. Eine solche Relativrotation kann eine Fluidströmung, insbesondere eine Luftströmung, bewirken, die die Verdichtereinheit antreibt. Es ist ferner jedoch auch vorstellbar, dass eine solche Strömung direkt über den Druckmittelpfad in Richtung des Reifens geleitet wird.

Gemäß einer weiteren Ausgestaltung ist die Verdichtereinheit koaxial zu einer Radachse der Radeinheit angeordnet. Beispielhaft kann die Verdichtereinheit zentral an einem Nabenkörper vorgesehen sein.

Gemäß einer alternativen Ausgestaltung ist die Verdichtereinheit außermittig, insbesondere exzentrisch zu einer Radachse der Radeinheit angeordnet. Dies kann beinhalten, dass die Verdichtereinheit am Nabenkörper, ferner grundsätzlich auch am Radkörper bzw. an der Felge angebracht ist. Ein solcher Felgenkörper kann insbesondere ein Felgenbett sowie eine sogenannte Radscheibe umfassen. Das Felgenbett kann einen etwa U-förmigen Querschnitt aufweisen, der zwei Wulste und eine sich zwischen diesen erstreckende vertiefte Fläche umfasst. Der U-förmige Querschnitt kann rotationssymmetrisch um die Radachse verlaufen und somit das Felgenbett ausbilden. Die Radscheibe stellt üblicherweise eine Verbindung zwischen dem Felgenbett sowie einem zentralen, axialen Bereich der Felge her. Die Radscheibe kann zur Aufnahme am Nabenkörper, insbesondere an einer Radaufnahme ausgebildet sein.

Eine Aufnahme der Verdichtereinheit am Nabenkörper hat den Vorteil, dass die Verdichtereinheit beim Wechsel des Rades oder Reifens am Nabenkörper verbleiben kann. Ein Anordnen der Verdichtereinheit an der Felge hat den Vorteil, dass die Verdichtereinheit gemeinsam mit der Felge eine Einheit bilden kann. Sofern die Verdichtereinheit an der Felge angeordnet ist, kann der Druckmittelpfad vollständig oder nahezu vollständig in die Felge integriert sein. Dies heißt mit anderen Worten, beim Wechseln des Rades muss der Druckmittelpfad nicht unterbrochen werden.

Sofern jedoch die Verdichtereinheit am Nabenkörper, also nicht an der Felge angeordnet ist, ist es von Vorteil, besondere Vorkehrungen zu treffen, um einen einfachen Radwechsel zu erlauben. Dies kann beispielsweise zumindest ein Schließventil beinhalten, das im Druckmittelpfad an der Schnittstelle zwischen dem Nabenkörper und der Felge sitzt. Ein solches Schließventil kann sich etwa beim Abnehmen der Felge selbstfertig verschließen und ein Eindringen von Schmutz verhindern. Es kann ferner von Vorteil sein, zumindest an der Felge oder an der Radnabe bzw. deren Radaufnahme einen Ringspalt vorzusehen. Dies kann mit dem Vorteil verbunden sein, dass das Rad in beliebiger (Dreh-)Orientierung an der Radaufnahme befestigt werden kann und über den Ringspalt stets eine Verbindung für den Druckmittelpfad hergestellt ist.

In analoger Weise könnte eine elektrische Kontaktierung über einen Schleifring erfolgen, so dass auch hier unabhängig von einer (Dreh-)Orientierung des montierten Rades relativ zur Radaufnahme eine sichere Verbindung im Energiebereitstellungspfad gewährleistet ist.

Gemäß einer weiteren Ausgestaltung weist die Druckmittelversorgungseinrichtung ferner eine Puffereinheit, insbesondere für elektrische Energie, auf. Die Puffereinheit kann der Energiebereitstellungseinheit und der Verdichtereinheit zwischen geordnet sein. Insbesondere kann die Puffereinheit an den Energiebereitstellungspfad angeschlossen sein. Bei der Puffereinheit kann es sich beispielhaft um einen Kondensator, um einen Akkumulator oder um ähnliche Speicherzellen handeln. Insbesondere kann die Puffereinheit mit der Verdichtereinheit ein sogenanntes Package bilden.

Die Puffereinheit kann dem Motor der Verdichtereinheit, der den Kompressor der Verdichtereinheit antreibt, Energie bereitstellen. Die Puffereinheit kann beispielsweise eine begrenzte Kapazität aufweisen, die für eine bestimmte Anzahl von Regelzyklen bzw. eine bestimmte Luftmenge ausgelegt ist. So ist es vorstellbar, die Puffereinheit bei Bedarf nachzuladen. Dies kann beispielsweise währen der Fahrt geschehen, indem die Relativrotation zwischen der Trägerseite und der Radkörperseite ausgenutzt wird, um elektrische Energie zu erzeugen, die der Puffereinheit zugeführt wird. Die Puffereinheit kann jedoch alternativ oder zusätzlich auch mit einer zentralen Bordelektronik verbunden sein und insbesondere von einem bordeigenen Versorgungsnetz des Fahrzeugs aus versorgt werden. Die Puffereinheit kann ihre gespeicherte Energie beliebig abgeben. So ist beispielsweise auch im Stillstand oder bei einer Fahrt mit geringer Geschwindigkeit eine Druckregelung ermöglicht.

Gemäß einer weiteren Ausgestaltung weist die Verdichtereinheit ferner eine Zusatzschnittstelle zur Energieversorgung auf, insbesondere zur Notversorgung. Hierbei kann es sich etwa um eine Steckerschnittstelle oder Buchsenschnittstelle handeln, die von außen zugänglich. Auf diese Weise könnte die Verdichtereinheit etwa im Stillstand mit elektrischer Energie versorgt werden, um einen Regelvorgang auszulösen.

Gemäß einer weiteren Ausgestaltung ist die Verdichtereinheit bedarfsweise mit einem Reservoir für Reifendichtmittel koppelbar, um dieses mit Druck zu beaufschlagen und über den Druckmittelpfad der Radkörperseite zuzuführen, wobei insbesondere ferner zumindest ein Schaltventil vorgesehen ist, um das Reservoir bedarfsweise anzusteuern.

Mit anderen Worten kann das Reservoir als Bestandteil der Druckversorgungseinrichtung in die Radeinheit integriert werden. Somit kann die Druckmittelversorgungseinrichtung auch als "Pannen-Set" fungieren. Im Falle eines Reifenschadens kann die Fahrtauglichkeit der Radeinheit wiederhergestellt werden.

In vorteilhafter Weise kann das Reservoir etwa dann angesteuert werden, wenn ein Reifendruckerfassungselement einen Druckabfall meldet. Auf diese Weise kann im Wesentlichen automatisch auf einen etwaigen Schaden reagiert werden.

Über das Schaltventil kann das Reservoir hinzugeschaltet werden. Beispielhaft kann das Schaltventil im Druckmittelversorgungspfad vorgesehen sein. Sofern das Schaltventil aktiviert wird, kann das in der Verdichtereinheit erzeugte und komprimierte Druckmittel umgeleitet werden, um das Reservoir für das Reifendichtmittel unter Druck zu setzen. Auf diese Weise kann das Reifendichtmittel mit einem Druck beaufschlagt werden und dem Druckmittelpfad und schlussendlich dem Reifen zugeführt werden.

Gemäß einer weiteren Ausgestaltung ist im Druckmittelpfad ferner ein Koppelventil vorgesehen, das insbesondere zwischen dem Nabenkörper und der Felge ein Trennen des Druckmittelpfades ermöglicht. Auf diese Weise kann der Reifenwechsel oder der Radwechsel erleichtert werden.

Gemäß einer weiteren Ausgestaltung der Druckmittelversorgungseinrichtung ist am Nabenkörper oder am Felgenkörper ein Ringkanal oder ein Ringabschnittskanal ausgebildet, der einen Abschnitt des Druckmittelpfads ausbildet, und der eine Montage des Felgenkörpers am Nabenkörper in einer Mehrzahl von Relativlagen erlaubt. Diese Maßnahme kann eine Montage oder einen Wechsel eines Rades deutlich vereinfachen. Idealerweise ist nämlich die Druckmittelversorgungseinrichtung derart in den Felgenkörper und den Nabenkörper integriert, dass aus Sicht eines Monteurs kein Unterschied zu gewöhnlichen Bauteilen sichtbar oder spürbar ist.

Üblicherweise weisen Räder im Fahrzeugbereich eine Mehrzahl von Befestigungselementen auf, die am Umfang von Felgenkörpers und Nabenkörper gleichverteilt angeordnet sind. Die Befestigungselemente können als Gewindebohrungen oder als festsitzende Radbolzen ausgestaltet sein. Im PKW-Bereich sind üblicherweise etwa vier oder fünf solcher Befestigungselemente vorgesehen. Im Nutzfahrzeugbereich sind beispielhaft bis hin zu zwölf oder gar mehr Befestigungselemente vorgesehen. Bei der Montage eines Rades ist es häufig schlichtweg unerheblich, welche aktuelle Relativlage der Felgenkörper und der Nabenkörper zueinander einnehmen - solange die Befestigungselemente und entsprechende Ausnehmungen zueinander ausgerichtet sind.

Der Ringkanal oder Ringabschnittskanal erlaubt eine Druckmittelleitung unabhängig von der aktuellen Drehorientierung zwischen dem Rad und der Radnabe. Der Fahrer oder der Monteur muss sich keine Gedanken machen, wie der Felgenkörper genau in Bezug auf den Nabenkörper auszurichten ist.

Gemäß einer Weiterbildung dieser Ausgestaltung weist der Ringkanal eine Mehrzahl von Anschlüssen auf, die derart an eine Radverschraubung angepasst sind, dass ein Kontaktelement des Felgenkörpers in einer Mehrzahl von Relativlagen jeweils einen der Anschlüsse kontaktiert und einen Druckmittelleitung vom Nabenkörper zum Felgenkörper erlaubt. Beispielhaft kann die Anzahl der Anschlüsse der Anzahl der Befestigungselemente entsprechen. Die Teilung der Anschlüsse am Umfang entspricht vorzugsweise der Teilung der Befestigungselemente. Somit genügt es zum Verbinden des Fluidpfades, das Rad in bekannter Weise grob auszurichten, um etwa Radbolzen oder Gewindebohrungen für Radschrauben und entsprechende Bohrungen im Felgenkörper in Überdeckung zu bringen.

Gemäß einer weiteren Ausgestaltung weist der Ringkanal eine Mehrzahl von Rückschlagsperren aufweist, die den Druckmittelpfad in einer Sperrstellung sperren und in einer Freigabesteilung freigeben, wobei das Kontaktelement des Felgenkörpers im montierten Zustand auf einen der Anschlüsse einwirkt, um dessen Rückschlagsperre in die Freigabesteilung zu überführen. Vorzugsweise ist jeweils eine Rückschlagsperre einem Anschluss im Ringkanal zugeordnet. Das Kontaktelement kann einen stiftartigen oder pinartigen Fortsatz umfassen, der die Rückschlagsperre beaufschlägt. Die Rückschlagsperren haben den Vorteil, dass etwa dann, wenn kein Rad montiert ist, kein Schmutz in den Druckmittelpfad gelangen kann. Ferner können die gerade nicht aktivierten Rückschlagsperren den Ringkanal auch dann abdichten, wenn der Radkörper montiert ist.

Gemäß einer weiteren Ausgestaltung weist die Verdichtereinheit eine elektrische Maschine auf, die motorisch und generatorisch betreibbar ist, wobei die elektrische Maschine insbesondere dazu ausgestaltet ist, im generatorischen Betrieb eine Puffereinheit zu laden und im motorischen Betrieb durch die Puffereinheit mit Energie zum Antrieb der Verdichtereinheit versorgt zu werden. Auf diese Weise kann die Druckmittelversorgungseinrichtung gewissermaßen in einem Hybrid-Modus betrieben werden. Ein der Verdichtereinheit zugeordneter Motor kann gleichzeitig auch als Generator fungieren. Demgemäß kann der Motor etwa einen Kompressor der Verdichtereinheit antreiben. Sofern der Motor als Generator benutzt wird, kann er in der Puffereinheit Energie speichern.

Auf diese Weise kann die Druckmittelversorgungseinrichtung nahezu vollständig autark gestaltet sein. Es sind weiterhin Ausgestaltungen vorstellbar, in denen eine Ankopplung an das bordeigene Versorgungsnetz nicht mehr erforderlich erscheint.

Gemäß einer weiteren Gestaltung der Druckmittelversorgungseinrichtung ist im Druckmittelpfad eine Druckabbauöffnung vorgesehen, die unter Druck eine definierte Leckage bewirkt und vorzugsweise in Abhängigkeit von einem Druckniveau im Druckmittelpfad zwischen einer geöffneten Stellung, in der eine geringe Menge des Druckmittels entweichen kann, und einer geschlossenen Stellung betreibbar ist, in der der Druckmittelpfad vor externen Verschmutzungen geschützt ist.

Die definierte Leckage kann eine Rückstellbewegung des Steuerkolbens nach einem Druckregelvorgang vereinfachen. Wäre nämlich das System, insbesondere der Druckmittelpfad, ideal abgedichtet, würde nach einem Regelvorgang ein beträchtlicher Druck im Druckmittelpfad anliegen, der durch den Steuerkolben überwunden werden müsste, um außer Eingriff zu gelangen, so dass die Radkörperseite möglichst vollständig von der Trägerseite getrennt ist. Daher ist es von Vorteil, dass System bewusst mit einer geringen Undichtigkeit zu versehen, so dass der Druck im Druckmittelpfad abgebaut wird, wenn kein Druckmittel nachströmt. Dann sinkt auch die erforderliche Rückstellkraft für den Steuerkolben. Diese definierte Undichtigkeit hat keine wesentlichen Auswirkungen auf den Regelvorgang und auf den erzielbaren Druck im Reifen.

Die Druckabbauöffnung kann grundsätzlich beliebig im Druckmittelpfad angeordnet sein, solange ein kontrollierter Druckabbau gewährleistet ist, wenn kein Druckmittel in Richtung des Rades nachströmt. Vorzugsweise ist die Druckabbauöffnung selbstregelnd oder selbstregulierend gestaltet und wird über den Druck im Druckmittelpfad gesteuert.

Gemäß einer Weiterbildung dieser Ausgestaltung weist die Druckabbauöffnung eine Durchgangsrichtung und eine Sperrrichtung auf. Die Druckabbauöffnung kann nach Art eines Rückschlagventils oder eines Sicherheitsventils gestaltet sein, jedoch bewusst mit einem geringen Durchsatz. Vorzugsweise ist die Druckabbauöffnung als Membrandichtung ausgestaltet. Alternativ oder zusätzlich kann die Druckabbauöffnung eine tüllenartige Gestaltung aufweisen. Es ist bevorzugt, dass die Druckabbauöffnung verschlossen ist, wenn im Druckmittelpfad kein Überdruck oder nur ein geringer Überdruck herrscht. Dies hat den Vorteil, dass dann keine Verschmutzungen von außen in den Druckmittelpfad eindringen können.

Beispielhaft kann die Druckabbauöffnung ähnlich einer Schlauchtülle gestaltet sein und aus einem hinreichend flexiblen Material gebildet sein. Die Druckabbauöffnung kann nach ähnlich einer geschlitzten Membran gestaltet sein und beim Anliegen eines bestimmten Überdrucks einen definierten Übertritt des Druckmittels nach Außen ermöglichen, um einen gewünschten Druckabbau herbeizuführen.

Die Erfindung wird ferner durch eine Radeinheit für ein Fahrzeug gelöst, die einen Achskörper und einen Felgenkörper mit einem Reifen aufweist, wobei der Felgenkörper mit dem Achskörper gekoppelt und insbesondere drehbar am Achskörper gelagert ist, wobei die Radeinheit ferner eine integrierte Druckmittelversorgungseinrichtung nach einem der vorgenannten Aspekte aufweist. Auf diese Weise kann beim Fahrzeug für einzelne oder sämtliche der Radeinheiten des Fahrzeugs eine dezentrale Druckmittelversorgung bereitgestellt werden. Die Druckmittelversorgungseinrichtung kann der Radeinheit zugeordnet und insbesondere in diese baulich und funktionell integriert werden.

Gemäß einer Weiterbildung der Radeinheit ist ferner ein Drucksensor vorgesehen, der radkörperseitig angeordnet ist und dazu ausgestaltet ist, einen Fluiddruck im Reifen zu überwachen, wobei der Drucksensor vorzugsweise dazu ausgestaltet ist, den erfassten Fluiddruck an eine Reifendruckregeleinheit zu übermitteln. Der Drucksensor kann grundsätzlich als aktiver und/oder passiver Drucksensor ausgestaltet sein. Der Drucksensor kann über eine Messleitung und/oder kabellos mit der Reifendruckregeleinheit verbunden sein. Der Drucksensor kann dazu ausgebildet sein, einen Ist-Druck im Reifen zu erfassen und ein hiermit korrespondierendes Signal auszugeben. In Abhängigkeit von dem erfassten Signal kann die Reifendruckregeleinheit die Druckmittelversorgungseinrichtung der Radeinheit ansteuern, um einen Druckregelvorgang auszulösen.

Der Drucksensor kann grundsätzlich am Verschlussventil vorgesehen sein. Es wäre grundsätzlich auch vorstellbar, bei der Verdichtereinheit einen Drucksensor vorzusehen.

Die Aufgabe der Erfindung wird auch durch ein verteiltes System zur Druckmittelversorgung, insbesondere zur Druckluftversorgung bei einem Fahrzeug, gemäß Anspruch 14 gelöst, wobei das Fahrzeug eine Mehrzahl von Radeinheiten aufweist, die insbesondere paarweise zumindest einer Achse zugeordnet sind, wobei zumindest einige der Radeinheiten mit einer integrierten Druckmittelversorgungseinrichtung nach einem der vorherstehenden Aspekte versehen sind, und wobei das System eine Reifendruckregeleinheit aufweist, die dazu ausgebildet ist, die Verdichtereinheit der jeweiligen Druckmittelversorgungseinrichtung selektiv zu aktivieren.

Die Reifendruckregeleinheit kann grundsätzlich als zentrale Steuerung ausgebildet sein. Demgemäß kann die Reifendruckregeleinheit den Luftdruck bzw. Fluiddruck einer Mehrzahl von Reifen parallel überwachen und regeln. Es wäre grundsätzlich auch vorstellbar, jeder Radeinheit eine eigene Regeleinheit zuzuordnen. Gelichwohl kann eine zentrale Überwachung und Steuerung von Vorteil sein. So ist es vorstellbar, zentral eine Druckvorgabe zu machen, um einen Zielbereich für die Druckregelung anzugeben. Auf diese Weise kann beispielsweise ein Fahrer des Fahrzeugs Druckanpassungen zentral vornehmen. Dies kann beispielsweise bei einem geänderten Untergrund, abhängig von einem Beladezustand des Fahrzeugs oder durch sonstige Umstände bedingt sein. Grundsätzlich kann die Reifendruckregeleinheit jedoch auch einen gewünschten Soll-Druck bzw. einen gewünschten Soll-Druck-Bereich für jede Radeinheit selbsttätig einregeln.

Ein erforderlicher Austausch von Regelsignalen, Messsignalen bzw. Steuerungssignalen zwischen der Reifendruckregeleinheit sowie den Druckmittelversorgungseinrichtungen kann grundsätzlich kabelgebunden und/oder kabellos erfolgen.

Im Stand der Technik sind verschiedene Arten von Kompressoren bekannt, die spezifische Nachteile und Vorteile aufweisen können. Zur Druckmittelversorgung, insbesondere zur Druckluftversorgung, eignen sich etwa sog. Kolbenkompressoren, die zumindest eine Kolben-Zylinder-Paarung aufweisen. Derartige Kompressoren sind grundsätzlich ähnlich einem Verbrennungsmotor gestaltet. Der zumindest eine Kolben des Kolbenkompressors kann mit einem Zylinder gepaart werden, um sich in diesem hin und her zu bewegen. Demgemäß kann der Kolben eine Ansaugbewegung und eine Kompressionsbewegung vollziehen. In geeigneter Weise kann eine Mehrzahl von Kolben-Zylinder-Paarungen miteinander verschaltet werden, um einen höheren Durchsatz bzw. höhere Ausgangsdrücke zu erzeugen. Ferner kann eine Mehrzahl von Kolben-Zylinder-Paarungen miteinander verschaltet werden, um Druckschwankungen am Auslass, die durch die zyklische Erzeugung des Drucks bei nur einer Kolben-Zylinder-Paarung bedingt sind, auszugleichen.

Es hat sich gezeigt, dass insbesondere die Kolben-Zylinder-Paarungen von Kolbenkompressoren einem beträchtlichen Verschleiß unterliegen können. Üblicherweise wird ein Kolben mit nur äußerst geringem Spiel in seinem gepaarten Zylinder aufgenommen. Ferner ist regelmäßig eine Dichtungsanordnung vorgesehen, die etwa einen Kolbenring, üblicherweise eine Mehrzahl von Kolbenringen (zwei, drei oder sogar mehr) umfasst. Die Kolbenringe sind allgemein als Federringe ausgestaltet und liegen mit einer Vorspannkraft am Zylinder an. Demgemäß ist die Kolben-Zylinder-Bewegung häufig reibungsbehaftet und damit auch verschleißbehaftet. Sofern keine hinreichende Schmiermittelversorgung und/oder Schmiermittelbenetzung erzeugbar ist, kommt es regelmäßig zu flächigen (schabenden) Metall-Metall-Gleitpaarungen. Derartige Relativbewegungen zwischen Metallteilen können einerseits zu beträchtlicher Wärmeentwicklung führen und andererseits einen hohen mechanischen Verschleiß mit sich bringen.

Vor diesem Hintergrund ist erfindungsgemäß vorgesehen, dass die Verdichtereinheit der Druckmittelversorgungseinrichtung einen Kompressor, insbesondere einen Kolbenkompressor aufweist. Der Kompressor weist zumindest einen Kolben auf, wobei der Kolben an seiner Lauffläche mit einer Aussparung versehen ist, insbesondere mit einer sich umfänglich erstreckenden Aussparung, die ein Schmierstoffdepot beherbergt.

Das Schmierstoffdepot steht vorzugsweise im montierten Zustand in direktem Kontakt mit einer Wandung eines Zylinders der Kolben-Zylinder-Paarung. Gemäß einer weiteren Ausgestaltung ist die Aussparung zwischen einer ersten Nut und einer zweiten Nut für Kolbenringe angeordnet ist, wobei die Nuten einen Abstand zueinander aufweisen, der vorzugsweise zumindest 25 %, weiter bevorzugt zumindest 40 %, noch weiter bevorzugt zumindest 50 % einer Gesamtlänge der Lauffläche des Kolbens umfasst. Gemäß einer weiteren Ausgestaltung weist die Aussparung an der Lauffläche des Kolbens eine Längserstreckung auf, die zumindest 30 %, weiter bevorzugt zumindest 50 %, noch weiter bevorzugt zumindest 60 %, einer Gesamtlänge der Lauffläche des Kolbens umfasst.

Diese erfindungsgemäßen Ausgestaltungen beruhen auf der Erkenntnis, dass zur Verschleißminimierung bei Kolbenkompressoren entweder aufwendige Schmiermittelversorgungssysteme erforderlich sind, die ggf. entsprechende Leitungen, Vorratsbehälter und Fördermittel für die Schmiermittel erfordern. Dies führt regelmäßig zu einem hohen baulichen Aufwand und kann insbesondere bei Anwendungen, bei denen Bauraumrestriktionen und/oder Kostenrestriktionen zu beachten sind, nicht ohne weiteres umgesetzt werden. Denkbare Anwendungen können beispielsweise Reifendrucküberwachungssysteme bzw. Reifendruckanpassungssysteme betreffen, die in Fahrzeuge integriert sind. Derartige Systeme werden einerseits häufig nicht im Dauerbetrieb beansprucht. Ferner ist häufig nur eine begrenzte (Betriebs-)Lebensdauer erforderlich, um etwa einen Gesamtlebenszyklus eines Fahrzeugs abzudecken, das mit einem entsprechenden System versehen ist. Umgekehrt gibt es häufig Bauraumrestriktionen und allgemein Kostenaspekte, die es zu beachten gilt.

Somit macht sich die Gestaltung gemäß dem oben beschriebenen erfindungsgemäßen Aspekt zunutze, dass eine überschaubare Betriebslebensdauer etwa dann abgedeckt werden kann, wenn am Kolben selbst ein hinreichend großes Schmiermitteldepot bereitgestellt werden kann und somit gewissermaßen eine in den Kolben integrierte Schmiermittelversorgung realisierbar ist. Der Kolben selbst weist üblicherweise eine gewisse Führungslänge auf, um ein Kippen im Zylinder zu vermeiden. Diese Führungslänge kann nunmehr genutzt werden, um dort (mittig) ein entsprechendes Schmiermitteldepot einzubringen. Das Schmiermitteldepot kann zumindest eine Aussparung umfassen, insbesondere eine umlaufende Aussparung, die etwa als Umfangsnut mit einer hinreichend großen Breitenerstreckung bzw. Längenerstreckung sowie einer hinreichend großen Tiefenerstreckung versehen ist. In die sich so ergebende Aussparung kann nunmehr ein geeignetes Schmiermittel, etwa ein Schmierfett, Schmieröl oder Ähnliches verschleißminderndes Mittel eingebracht werden. Das Schmiermittel kann in einem Trägermaterial bzw. in dieses eingebunden sein. Bei dem Trägermaterial kann es sich etwa um ein schwammartiges Material oder allgemein um ein poröses Material handeln. Es eignen sich beispielsweise auch Trägermaterialien aus einem Sinterwerkstoff, die in entsprechender Weise mit Öl oder Fett getränkt sein können.

Vorzugsweise ist das Schmiermitteldepot in Kolben zwischen zwei Kolbenringen angeordnet. Auf diese Weise können die Kolbenringe ferner auch als Dichtung für das Schmiermitteldepot fungieren. Somit kann sichergestellt werden, dass sich der Verbrauch des Schmiermittels in einem verträglichen Rahmen hält. Somit kann etwa eine definierte Menge des Schmiermittels in die Aussparung am Kolben eingebracht werden, die an die erwartete Lebensdauer bzw. Betriebslebensdauer der Kolben-Zylinder-Paarung angepasst ist. Dies hat einerseits den Vorteil, dass eine aufwendige Schmiermittelversorgung beim Kolbenkompressor und der damit verbundene Aufwand eingespart werden kann. Jedoch kann eine effiziente Schmierung zwischen dem Kolben und dem Zylinder bereitgestellt werden. Ein weiterer Vorteil besteht darin, dass gewissermaßen bereits ab dem ersten Kolbenhub das Schmiermittel zur Verfügung steht. Dies ist häufig bei bekannten Schmiermittelversorgungseinrichtungen nicht der Fall, da dort erst das Schmiermittel der Zylinderwand bzw. dem Kolben zugeführt werden muss. Ein weiterer Vorteil besteht darin, dass das Spiel zwischen dem Kolben (bzw. den Kolbenringen) und dem Zylinder noch weiter minimiert werden kann, da eine effiziente Schmierung bereitgestellt werden kann. Auf diese Weise können beim Kolbenkompressor noch höhere Ausgangsdrücke bereitgestellt werden.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- FIG. 1: eine schematische, stark vereinfachte Ansicht eines Fahrzeugs mit einer Druckregelanlage mit einer zentralen Druckluftversorgung;
- FIG. 2: eine schematische, stark vereinfachte Ansicht eines Fahrzeugs mit einer dezentralen Reifendruckregelanlage mit dezentralen Druckmittelversorg u ng sei nrichtungen;
- FIG. 3: eine schematische, stark vereinfachte Ansicht eines Fahrzeugs mit einer dezentralen Reifendruckregelanlage, die der Anlage gemäß FIG. 2 ähnlich gestaltet ist;
- FIG. 4: eine Teilschnittansicht einer Radeinheit zur Veranschaulichung möglicher Druckmittelpfade;
- FIG. 5: eine weitere Teilschnittansicht einer Radeinheit zur Veranschaulichung weiterer alternativer Druckmittelpfade;
- FIG. 6: eine weitere geschnittene Ansicht einer Radeinheit zur Veranschaulichung möglicher Einbauorte von Verdichtereinheiten;
- FIG. 7: eine weitere geschnittene Ansicht einer Radeinheit zur Veranschaulichung möglicher Einbauorte von Puffereinheiten zur Energiespeicherung;
- FIG. 8: eine geschnittene Ansicht einer Radeinheit zur Veranschaulichung eines Ausführungsbeispiels einer Druckmittelversorgungseinrichtung;
- FIG. 9: eine geschnittene Ansicht einer Radeinheit zur Veranschaulichung einer weiteren Ausgestaltung einer Druckmittelversorgungseinrichtung;
- FIG. 10: eine stark vereinfachte, geschnittene Ansicht einer Radeinheit zur Veranschaulichung einer weiteren Ausgestaltung einer Druckmittelversorgungseinrichtung;
- FIG. 11: eine geschnittene Ansicht einer Radeinheit zur Veranschaulichung einer weiteren Ausgestaltung einer Druckmittelversorgungseinrichtung;
- FIG. 12: eine geschnittene Ansicht einer Radeinheit zur Veranschaulichung einer weiteren Ausgestaltung einer Druckmittelversorgungseinrichtung;
- FIG. 13: eine stark vereinfachte, geschnittene Ansicht einer Radeinheit zur Veranschaulichung einer weiteren Ausgestaltung einer Druckmittelversorgungseinrichtung;
- FIG. 14: eine stark vereinfachte, geschnittene Ansicht einer Radeinheit zur Veranschaulichung einer weiteren Ausgestaltung einer Druckmittelversorgungseinrichtung;
- FIG. 15: eine stark vereinfachte, geschnittene Ansicht einer weiteren Radeinheit zur Veranschaulichung einer weiteren Ausgestaltung einer Druckmittelversorgungseinrichtung;
- FIG. 16: eine geschnittene Ansicht einer Radeinheit zur Veranschaulichung einer weiteren Ausgestaltung einer Druckmittelversorgungseinrichtung;
- FIG. 17: eine weitere geschnittene Ansicht einer Radeinheit zu Veranschaulichung einer weiteren Ausgestaltung einer Druckmittelversorgungseinrichtung;
- FIG. 18: eine geschnittene Ansicht einer Radeinheit zur Veranschaulichung einer weiteren Ausgestaltung einer Druckmittelversorgungseinrichtung;
- FIG. 18a: eine schematische Teilansicht eines Schleifkontakts der Druckmittelversorgungseinrichtung gemäß FIG. 18;
- FIG. 19: eine geschnittene Ansicht einer Radeinheit zur Veranschaulichung einer weiteren Ausgestaltung einer Druckmittelversorgungseinrichtung;
- FIG. 20: eine stark vereinfachte, geschnittene Ansicht einer Radeinheit zur Veranschaulichung einer weiteren Ausgestaltung einer Druckmittelversorgungseinrichtung;
- FIG. 21: eine stark vereinfachte, geschnittene Ansicht einer Radeinheit zur Veranschaulichung einer weiteren Ausgestaltung einer Druckmittelversorgungseinrichtung;
- FIG. 21a, 21b: stark vereinfachte Axialschnitte eines Reservoirs gemäß FIG. 21 mit einem Dichtmittel in einer geöffneten Stellung (FIG. 21a) und einer geschlossenen Stellung (FIG. 21b);
- FIG. 22: eine geschnittene Ansicht einer Radeinheit zur Veranschaulichung einer weiteren Ausgestaltung einer Druckmittelversorgungseinrichtung;
- FIG. 23: eine geschnittene Ansicht einer Radeinheit zur Veranschaulichung einer weiteren Ausgestaltung einer Druckmittelversorgungseinrichtung;
- FIG. 24: eine geschnittene Ansicht einer Radeinheit zur Veranschaulichung einer weiteren Ausgestaltung einer Druckmittelversorgungseinrichtung;
- FIG. 24a, 24b: einen seitlichen Schnitt (FIG. 24a) und einen Axialschnitt (FIG. 24b) durch die Verdichtereinheit gemäß der anhand FIG. 24 veranschaulichten Ausgestaltung;
- FIG. 25: eine geschnittene Ansicht einer Radeinheit zur Veranschaulichung einer weiteren Ausgestaltung einer Druckmittelversorgungseinrichtung;
- FIG. 26: eine geschnittene Ansicht einer Radeinheit zur Veranschaulichung einer weiteren Ausgestaltung einer Druckmittelversorgungseinrichtung;
- FIG. 27: eine geschnittene Ansicht einer Radeinheit zur Veranschaulichung einer weiteren Ausgestaltung einer Druckmittelversorgungseinrichtung;
- FIG. 27a: eine schematische Teilansicht eines Schleifringkontakts, der bei der Druckmittelversorgungseinrichtung gemäß FIG. 27 verwendbar ist;
- FIG. 28: eine geschnittene Ansicht einer Radeinheit zur Veranschaulichung einer weiteren Ausgestaltung einer Druckmittelversorgungseinrichtung;
- FIG. 28a: stark vereinfachte, vergrößerte Ansichten eines druckgesteuerten Ventils, das bei der Druckmittelversorgungseinrichtung gemäß FIG. 28 verwendbar ist, in einer geschlossenen und einer durchlässigen Stellung;
- FIG. 29: eine geschnittene Ansicht einer Radeinheit zur Veranschaulichung einer weiteren Ausgestaltung einer Druckmittelversorgungseinrichtung;
- FIG. 29a, 29b: stark vereinfachte, schematische Ansichten eines Koppelventils (Figur 29a) sowie eines druckgesteuerten Ventils (FIG. 29b), die bei der Druckmittelversorgungseinrichtung gemäß FIG. 29 verwendbar sind;
- FIG. 30: eine stark vereinfachte schematische Prinzipdarstellung eines Kolbenkompressors;
- FIG. 31: einen seitlichen Schnitt durch einen Kolben, der sich zur Verwendung bei einem Kolbenkompressor eignet;
- FIG. 32: einen seitlichen Schnitt durch einen Kolben für einen Kolbenkompressor, der gemäß verschiedenen Prinzipien der vorliegenden Offenbarung gestaltet ist;
- FIG. 33: eine stark vereinfachte schematische Schnittdarstellung eines Kompressors, der beispielhaft vier sternförmig angeordnete Kolben- Zylinder-Paarungen umfasst;
- FIG. 33a, 33b: vergrößerte Teildarstellungen des Kompressors gemäß FIG. 33 zur Veranschaulichung der Funktionalität des Verdichtungsvorgangs;
- FIG. 34: eine schematische, stark vereinfachte Schnittansicht einer Ausführungsform einer Ventilanordnung, die einem Druckmittelpfad zugeordnet ist;
- FIG. 35a - 35d: schematische, stark vereinfachte Blockdarstellungen von Sperrelementen beispielhafter Druckabbauöffnungen für die Anordnung gemäß FIG. 34;
- FIG. 36a - 36c: schematische, stark vereinfachte Seitenansichten beispielhafter Ausgestaltungen eines Dreh-Fest-Übergangs für einen Energieversorgungspfad einer Druckmittelversorgungseinrichtung;
- FIG. 37: eine schematische, stark vereinfachte frontale Schnittansicht einer Ausgestaltung eines mit einem Ringkanal versehenen Nabenkörpers für eine Druckmittelversorgungseinrichtung;
- FIG. 37a, 37b: schematische, stark vereinfachte seitliche Teilschnittansichten entlang der Linie XXXVII-XXXVII in FIG. 37 zur Veranschaulichung einer Querschnittsgestaltung; und
- FIG. 38: eine seitliche geschnittene Teildarstellung einer Druckmittelversorgungseinrichtung mit einem Nabenkörper und einem Radkörper, die sich im Eingriff befinden, um einen Druckmittelpfad auszubilden.

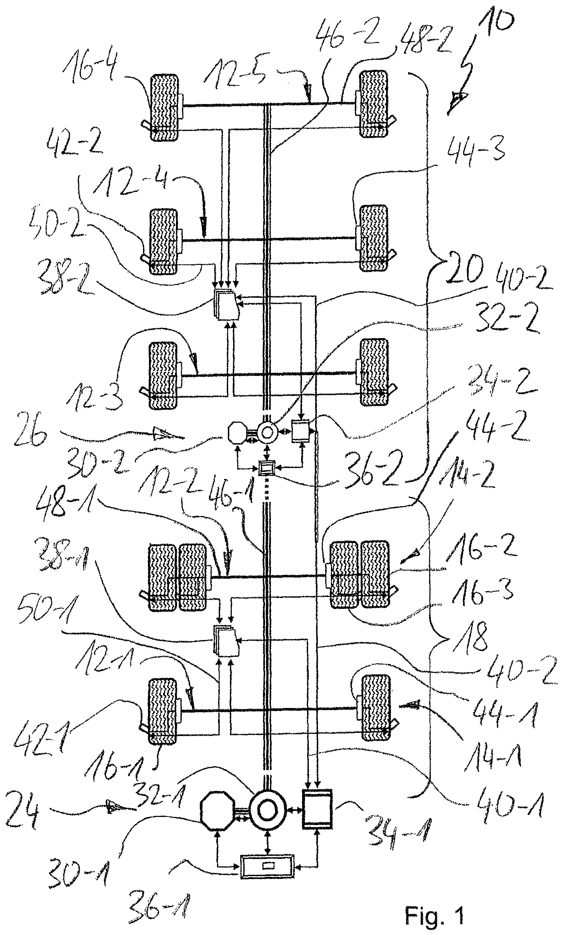

FIG. 1 zeigt eine stark vereinfachte, schematische Ansicht eines Fahrzeugs, das insgesamt mit 10 bezeichnet ist. Bei dem Fahrzeug 10 kann es sich insbesondere um ein Nutzfahrzeug handeln. Das Fahrzeug 10 kann beispielsweise ein Zugfahrzeug 18 sowie einen Hänger oder Auflieger 20 umfassen. Es versteht sich, dass das Fahrzeug 10 auch als Personenfahrzeug, Lastkraftwagen oder in ähnlicher Weise gestaltet sein kann.

Das Fahrzeug 10 weist eine Mehrzahl von Achsen 12-1 bis 12-5 auf, denen jeweils Radeinheiten 14 mit Reifen 16 paarweise zugeordnet sind.

Zur Druckanpassung bzw. Druckregelung in den Reifen 16 weist das Fahrzeug 10 eine zentrale Druckluftversorgung 24, 26 auf. Beispielhaft kann für das Zugfahrzeug 18 eine mit 24 bezeichnete Druckluftversorgung und für den Hänger oder Auflieger 20 eine mit 26 bezeichnete Druckluftversorgung vorgesehen sein. Dies kann dadurch bedingt sein, dass das Zugfahrzeug 18 und der Hänger 20 grundsätzlich voneinander trennbar sind. Auch wenn im vorliegenden Beispiel zwei (zentrale) Druckluftversorgungen 24, 26 vorgesehen sind, so ist jedoch jeder der Druckluftversorgungen 24, 26 für eine Mehrzahl von Achsen 12 bzw. Reifen 16 verantwortlich.

Die zentralen Druckluftversorgungen 24, 26 können einen Kompressor 30-1, 30-2, einen Speicher 32-1, 32-2 sowie eine Steuereinheit 34-1, 34-2 umfassen. Ferner kann jeweils eine Bedienerschnittstelle 36-1, 36-2 vorgesehen sein, über die etwa ein Benutzer Eingaben vornehmen kann. Über die Bedienerschnittstelle 36-1, 36-2 können dem Benutzer ferner Informationen ausgegeben werden, wie etwa ein Ist-Reifend ruck.

Die Druckluftversorgungen 24, 26 können ferner (zentrale) Steuerelemente 38-1, 38-2 umfassen. Die Steuerelemente 38 können etwa als Datenerfassungselemente, Datenspeicher oder in ähnlicher Weise gestaltet sein. Die Steuerelemente 38 können mit den Steuereinheiten 34 gekoppelt sein, um Daten auszutauschen.

Die zentrale Druckluftversorgung 24, 26 weist ferner eine (zentrale) Datenleitung 40-1, 40-2 auf, mit der die Steuereinheiten 34-1, 34-2 mit den Steuerelementen 38-1, 38-2 verbindbar sind, um Daten auszutauschen.

Die Reifen 16 können jeweils einer Radeinheit 14 zugeordnet sein. Jeder Reifen 16 kann ein Ventil 42 aufweisen, das von außen zugänglich ist. Bei dem Ventil 42 kann es sich insbesondere um ein herkömmliches Druckluftventil handeln. Jede der Radeinheiten 14 kann jedoch ferner auch eine Druckregelung 44 umfassen, die mit dem jeweiligen (Druckluft-)Speicher 32-1, 32-2 gekoppelt sind. Die Kopplung erfolgt über ein verzweigtes Leitungsnetz. Das Leitungsnetz kann zentrale Druckleitungen 46-1, 46-2 sowie Druckleitungsabschnitte bzw. Druckleitungsverzweigungen 48-1, 48-2 aufweisen. Die Druckleitungsabschnitte 48 stellen die "Verästelungen" der Druckleitungen 46 dar. Über die Druckleitungen 46, 48 kann jede Radeinheit 14 (zentral) mit Druckluft versorgt werden. Eine Kommunikation bzw. Datenübertragung zwischen den Druckregelungen 44 und den Steuereinheiten 34 bzw. deren Steuerelementen 38 kann über zentrale Datenleitungen 40-1, 40-2 sowie über (dezentrale) Datenleitungen 50-1, 50-2 erfolgen, die Verästelungen der (zentralen) Datenleitungen 40-1, 40-2 darstellen können.

Das anhand der FIG. 1 veranschaulichte System mit der zentralen Druckluftversorgung 24, 26 ist nur mit einem verhältnismäßig hohen Aufwand realisierbar und relativ wartungsintensiv. Insbesondere die Verlegung der Druckleitungen 46, 48 erfordert beträchtliche Aufwendungen und kann zu relativ hohen Kosten führen.

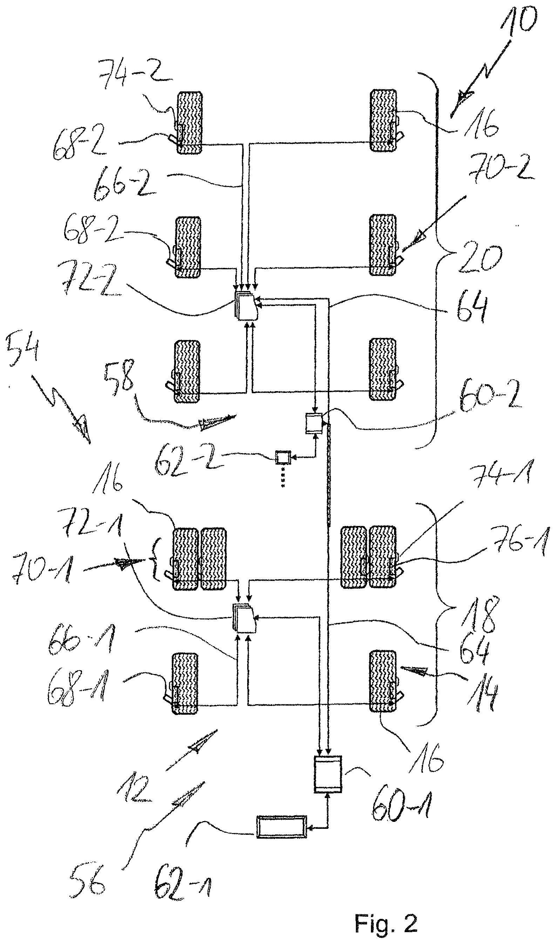

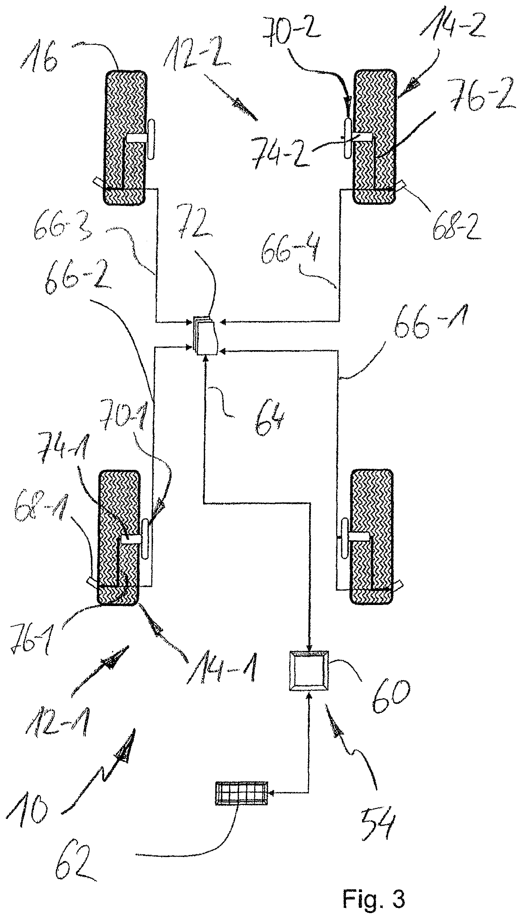

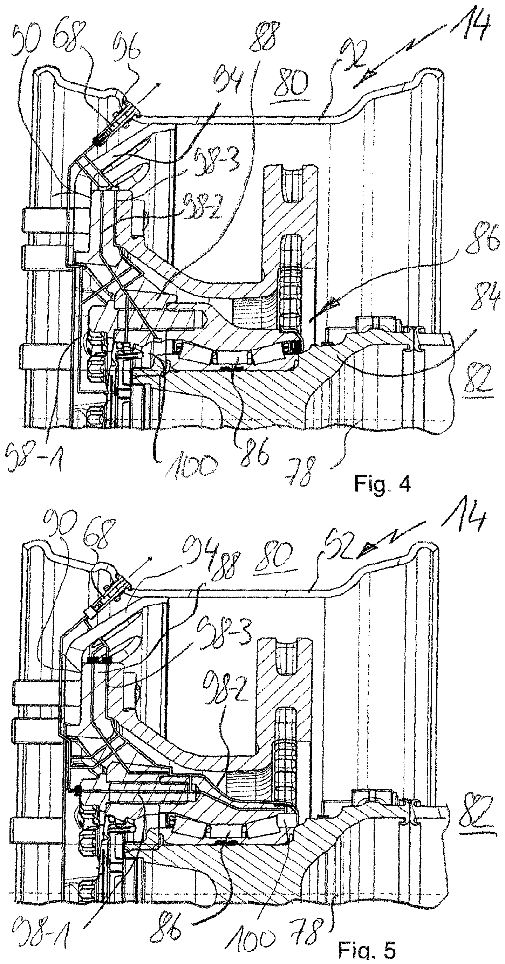

FIG. 2 und FIG. 3 veranschaulichen alternative Ausgestaltungen von Druckluftversorgungssystemen bei Fahrzeugen 10, die eine dezentrale Anordnung aufweisen. Anhand der FIG. 4 bis 29b werden verschiedene Aspekte und Ausgestaltungen von dezentralen Druckmittelversorgungseinrichtungen veranschaulicht und näher beschrieben.

FIG. 2 zeigt eine stark vereinfachte, schematische Darstellung eines Fahrzeugs 10, das in ähnlicher Weise wie in FIG. 1 ein Zugfahrzeug 18 sowie einen Hänger oder Auflieger 20 umfassen kann. Das Fahrzeug 10 weist eine Mehrzahl von Radeinheiten 14 auf, die Reifen 16 umfassen und Achsen 12 des Fahrzeugs 10 zugeordnet sind.

Beim Fahrzeug 10 ist ein dezentral verteiltes System 54 zur Druckluftregelung und/oder -Versorgung vorgesehen. Das System 54 kann einen Abschnitt 56 und einen Abschnitt 58 aufweisen. Der Abschnitt 56 kann dem Zugfahrzeug 18 zugeordnet sein. Der Abschnitt 58 kann dem Hänger oder Auflieger 20 zugeordnet sein. Das System 54, insbesondere jeder der Abschnitte 56, 58, kann eine Steuereinheit 60-1, 60-2 zur Steuerung der Druckluftversorgung und/oder -regelung umfassen. Ferner kann eine Bedienerschnittstelle 62-1, 62-2 vorgesehen sein, die in analoger Weise zur Bedienerschnittstelle 36 des anhand der FIG. 1 veranschaulichten Fahrzeugs 10 ausgestaltet sein kann.

Das System 54 unterscheidet sich von der zentralen Druckluftversorgung 24, 26 im Wesentlichen dadurch, dass keine zentralen Druckleitungen erforderlich sind. Ebenso kann auf die Bereitstellung zentraler Kompressoren, Speicher und ähnlicher Komponenten verzichtet werden. Stattdessen weist das dezentrale System 54 bei zumindest einigen seiner Radeinheiten 14 dezentrale Druckmittelversorgungseinrichtungen 70 auf. Eine Kommunikation zwischen der Steuereinheit 60-1, 60-2 und den Druckmittelversorgungseinrichtungen 70 kann über Leitungen 64, 66 erfolgen. Bei der Leitung 64 kann es sich um eine zentrale Leitung oder Datenleitung handeln. Mit 66-1, 66-2 bezeichnete Leitungen können als Verästelungen oder dezentrale Leitungen gestaltet sein. Die Leitungen 64, 66 können grundsätzlich zur Übermittlung von Informationen ausgestaltet sein. Alternativ oder zusätzlich können die Leitungen 64, 66 jedoch auch zur Übermittlung und/oder Übertragung von Energie ausgestaltet sein. Zumindest einige der Leitungen 64, 66 können durch kabellose Verbindungen realisiert werden, sofern es vorrangig um die Übermittlung von Daten und/oder Informationen geht. Die zentrale Kommunikation und/oder Ansteuerung erfolgt jedoch nicht über Druckluftleitungen. Die Leitungen 64, 66 können grundsätzlich einfacher und mit weniger baulichem Aufwand als entsprechende Druckluftleitungen realisiert werden.

Ferner ist jeder der Reifen 16 in FIG. 2 mit einem Ventil oder Verschlussventil 68-1, 68-2 versehen. Das Verschlussventil 68 kann grundsätzlich ein extern zugängliches Ventil sein, das für externe Kompressoren und Ähnliches zugänglich ist.

Das dezentrale Verteilersystem 54 kann ferner mit der Steuereinheit 60-1, 60-2 gekoppelte Steuerelemente 72-1, 72-2 umfassen, die etwa als Datensammler, Datenspeicher oder in ähnlicher Weise ausgestaltet sein können. Die Steuerelemente 72-1, 72-2 können insbesondere zur Datensammlung und/oder Datenübermittlung ausgestaltet sein. Die Steuerelemente 72-1, 72-2 können gewissermaßen als Verzweigungen oder Knoten im Netz der Leitungen 64, 66 ausgestaltet sein. Es versteht sich, dass die Steuereinheit 60-1, 60-2 und das Steuerelement 72-1, 72-2 grundsätzlich auch baulich miteinander gekoppelt und in ein gemeinsames Gehäuse bzw. eine gemeinsame Baugruppe integriert sein können.

FIG. 3 veranschaulicht ein weiteres Fahrzeug 10, das ähnlich der anhand der FIG. 2 veranschaulichten Ausgestaltung ein dezentrales, verteiltes System 54 zur Reifendruckregelung aufweisen kann. Im Unterschied zur FIG. 2 erfolgt bei dem anhand der FIG. 3 veranschaulichten Fahrzeug jedoch keine Unterteilung in Zugfahrzeug 18 und Hänger 20. Folgegemäß kann es sich bei dem Fahrzeug 10 gemäß FIG. 3 etwa um einen Personenkraftwagen oder allgemein um ein anhängerloses Fahrzeug handeln.

Auch das Fahrzeug 10 weist eine Mehrzahl von Achsen 12 auf, denen Radeinheiten 14 mit Reifen 16 zugeordnet sind. Das dezentrale, verteilte System 54 zur Reifendrucksteuerung kann mit einer Steuereinheit 60, einem Steuerelement 72 und mit einer Bedienerschnittstelle 62 ausgestaltet sein. Kommunikation zwischen den Komponenten und des Systems 54 kann über Leitungen 64, 66 erfolgen. Jede der in FIG. 3 gezeigten Radeinheiten 14-1, 14-2 ist mit einer entsprechenden Druckmittelversorgungseinrichtung 70-1, 70-2 ausgerüstet. Die Druckmittelversorgungseinrichtungen 70-1, 70-2 weisen jeweils einen Verdichter bzw. eine Verdichtereinheit 74 auf, die über einen dezentralen Druckmittelpfad bzw. eine dezentrale Druckmittelleitung 76 mit dem Reifen 16 verbindbar sind. Mit anderen Worten kann pro Radeinheit 14 ein eigener Verdichter 74 und eine eigene Druckmittelleitung 76 vorgesehen sein. Die Druckmittelleitung 76 kann etwa mit dem Verschlussventil 68-1, 68-2 gekoppelt sein, um den Reifen 16 zu versorgen.

Es ist grundsätzlich auch vorstellbar, dass die dezentrale Druckmittelleitung 76 jeder Druckmittelversorgungseinrichtung 70 unabhängig vom jeweiligen Verschlussventil 68 in den Reifen 16 mündet. Demgemäß kann ein separates Ventil verbaut sein. Es ist jedoch auch vorstellbar, dass die Druckmittelleitung 76 und das (ggf. extern zugängliche) Verschlussventil 68 an eine gemeinsame Leitung ankoppeln, über die der Reifen 16 befüllt werden kann.

Mit einem verteilten System 54, das beispielhaft in den FIG. 2 und 3 dargestellt ist und dessen Komponenten nachfolgend beispielhaft anhand der FIG. 4 bis 29b näher beschrieben werden, lassen sich verschiedene Vorteile erzielen. Das System 54 kann grundsätzlich dazu ausgebildet sein, Druckluft während der Fahrt oder im Stand zu regulieren. Idealerweise ist es aber unerheblich, ob das Fahrzeug gerade in Bewegung ist oder stillsteht. Die Fehleranfälligkeit des Druckregelungssystems 54 kann sinken. Dies ist beispielsweise durch geringere Leitungslängen ermöglicht. Erforderliche Druckluftleitungen bzw. Druckmittelleitungen lassen sich mit deutlich geringerem Aufwand am Fahrzeug 10, insbesondere an dessen Radeinheiten 14, anbringen. Druckluftverluste lassen sich deutlich reduzieren.

Die Anzahl der erforderlichen Dichtungen und/oder Verzweigungen lässt sich ebenso begrenzen. Das System 54, insbesondere dessen Druckmittelleitungen 76, kann vor Umwelteinflüssen geschützt werden. Es sind allgemein in den Druckmittelleitungen 76 insgesamt weniger Schließventile erforderlich. Bei einem zentralen System zur Druckluftüberwachung ist beispielsweise ein aufwendiger Ventilblock zur Zu- und Abschaltung der jeweils gewünschten Druckmittelleitung erforderlich. Eine solche Regelung kann durch eine elektrische Regelung oder elektronische Regelung ersetzt werden. Demgemäß kann ein "elektrischer" oder "elektronischer" Steuerblock kostengünstiger und mit geringerem Gewichtsbedarf im Vergleich zu einem "pneumatischen" Steuerblock gestaltet werden.

Das System 54 kann ohne wesentlichen Nachrüst- und/oder Umrüstaufwand in bestehende Fahrzeuge 10 integriert werden. Jede Radeinheit 14 kann grundsätzlich unabhängig vom Gesamtsystem mit Druckluft versorgt werden. Hierdurch kann sich die Steuerung des Gesamtsystems vereinfachen, da weniger Interdependenzen auftreten. Ein ggf. erforderlicher Austausch von Informationen und/ oder Daten (etwa betreffend einen Ist-Druck im Reifen) kann grundsätzlich kabelgebunden und/oder kabellos erfolgen. Energie, insbesondere elektrische Energie, kann dem Verdichter 74 kabellos zugeführt werden, beispielhaft induktiv. Demgemäß kann sich der Verschleiß bei einem ggf. erforderlichen Dreh-Fest-Übergang deutlich reduzieren.

Die Verdichtereinheit 74 kann in einem sogenannten Hybrid-Modus betrieben werden. Dies kann beispielsweise umfassen, dass die Verdichtereinheit 74 beistehendem Fahrzeug 10 über eine integrierte Puffereinheit mit Energie versorgbar ist, um einen verbauten Kompressor anzutreiben. Eine Regulierung während der Fahrt kann beispielhaft über das Bordspannungsnetz erfolgen. Ferner kann während der Fahrt die Puffereinheit aufgeladen werden. Dies kann grundsätzlich auch über das Bordspannungsnetz erfolgen. Ferner wäre es vorstellbar, bei der Verdichtereinheit 74 einen Generator vorzusehen, der die Puffereinheit auflädt. Vorzugsweise ist der Antriebsmotor der Verdichtereinheit 74 dazu ausgestaltet, sowohl motorisch als auch generatorisch betrieben werden zu können. Auf diese Weise ließe sich eine nahezu völlig autarke Druckmittelversorgungseinrichtung 70 realisieren. Mit anderen Worten kann die Relativrotation zwischen den Radeinheiten 14 und den Achsen 12 des Fahrzeugs 10 genutzt werden, um Energie für die Druckmittelversorgungseinrichtung 70 bereitzustellen.

Anhand der FIG. 4 bis 7 werden verschiedene denkbare Konfigurationen betreffend die Gestaltung und Anordnung von Druckmittelpfaden, Verdichtereinheiten sowie Puffereinheiten veranschaulicht. Es versteht sich, dass die Gestaltungen gemäß den FIG. 4 bis 7 grundsätzlich untereinander austauschbar und miteinander kombinierbar sind. Ferner wird anhand der FIG. 4 bis 7 auf die grundlegende Gestaltung einer Radeinheit 14 eingegangen.

FIG. 4 zeigt eine Radeinheit 14 in einer geschnittenen Teildarstellung. Die Radeinheit 14 weist eine Achse 78 auf. Die Radeinheit 14 kann grundsätzlich in eine Radkörperseite 80 und eine Trägerseite 82 unterteilt werden. Üblicherweise ist die Trägerseite 82 diejenige Seite, die gestellfest beim Fahrzeug 10 vorgesehen ist. Demgemäß ist die Radkörperseite 80 grundsätzlich diejenige Seite, die relativ zur Trägerseite 82 um die Achse 78 rotierbar ist. Bei der Trägerseite 82 kann insbesondere ein Achskörper 84 ausgebildet sein, der einen Flansch zur Aufnahme der Radkörperseite 80 aufweist. Der Achskörper 84 kann die Achse 78 definieren.

Die Radkörperseite 80 und die Trägerseite 82 können insbesondere über ein Radlager 86 miteinander gekoppelt sein. Das Radlager 86 stellt eine Verbindung zwischen der Trägerseite 82 und der Radkappenseite 80 dar.

Der Radkörperseite 80 kann ein Nabenkörper 88 zugeordnet sein, der über das Radlager 86 drehbar am Achskörper 84, insbesondere an dessen Achsaufnahme, aufgenommen ist. Der Nabenkörper 88 kann eine Radaufnahme 90 bereitstellen, die an der etwa ein Felgenkörper 92 aufnehmbar ist. Da Räder eines Fahrzeugs 10 üblicherweise wechselbar sind, kann der Felgenkörper 92 beispielsweise über Radmuttern oder Radschrauben an der Radaufnahme 90 des Nabenkörpers 88 fixiert werden. Der Felgenkörper 92 kann beispielhaft über eine Radscheibe bzw. einen Radkranz 94 mit der Radaufnahme 90 gekoppelt sein. Im Felgenkörper 92 ist beispielhaft ferner ein Ventilsitz 96 vorgesehen, der zur Aufnahme des Verschlussventils 68 ausgebildet ist. Auf eine Darstellung des Reifens 16 wurde in den FIG. 4 bis 29b verzichtet.

Auch wenn die Druckmittelversorgungseinrichtung 70 gemäß der vorliegenden Offenbarung grundsätzlich mit kürzeren Druckleitungsabschnitten als bekannte Systeme auskommt, ist es erforderlich, zumindest bei Teilen der Radeinheit 14 einen Druckmittelpfad 98 für das Druckmittel bereitzustellen. Insbesondere kann sich der Druckmittelpfad 98 zwischen dem Ventil 68 und der Verdichtereinheit 74 erstrecken.

FIG. 4 veranschaulicht verschiedene Konfigurationen und Gestaltungen von Druckmittelpfaden 98-1, 98-2, 98-3. Der Druckmittelpfad 98-1 wird beispielsweise außerhalb des Radkranzes 94 an diesem entlang in Richtung auf das Ventil 68 geführt. Die Druckmittelpfade 98-2, 98-3 führen dagegen beispielhaft zumindest teilweise durch den Nabenkörper 88 bzw. sind mit diesem verbunden.

FIG. 5 veranschaulicht weitere alternative Ausgestaltungen von Druckmittelpfaden 98-1, 98-2, 98-3. Die anhand der FIG. 4 und 5 veranschaulichten Druckmittelpfade 98 erstrecken sich im Wesentlichen auf der Radkörperseite 80 der Radeinheit 14. Die Gestaltung gemäß den FIG. 4 und 5 unterscheiden sich voneinander im Wesentlichen dadurch, dass die Druckmittelpfade 98 in FIG. 5 an einem fahrzeugseitigen Ende des Lagers 86 in einen Ringspalt 100 münden. Demgegenüber sind die anhand der FIG. 4 veranschaulichten Druckmittelpfade 98 an ein gegenüberliegendes Ende des Lagers 86, das vom Fahrzeug weg zeigt, an einen Ringspalt 100 angekoppelt. Der Ringspalt 100 kann am fahrzeugseitigen Ende des Lagers 86 angeordnet sein. Alternativ kann der Ringspalt 100 am vom Fahrzeug abgewandten Ende des Lagers 86 angeordnet sein. Der Ringspalt 100 kann beispielhaft zur Realisierung des Dreh-Fest-Übergangs für die Druckmittelpfade 98 genutzt werden.

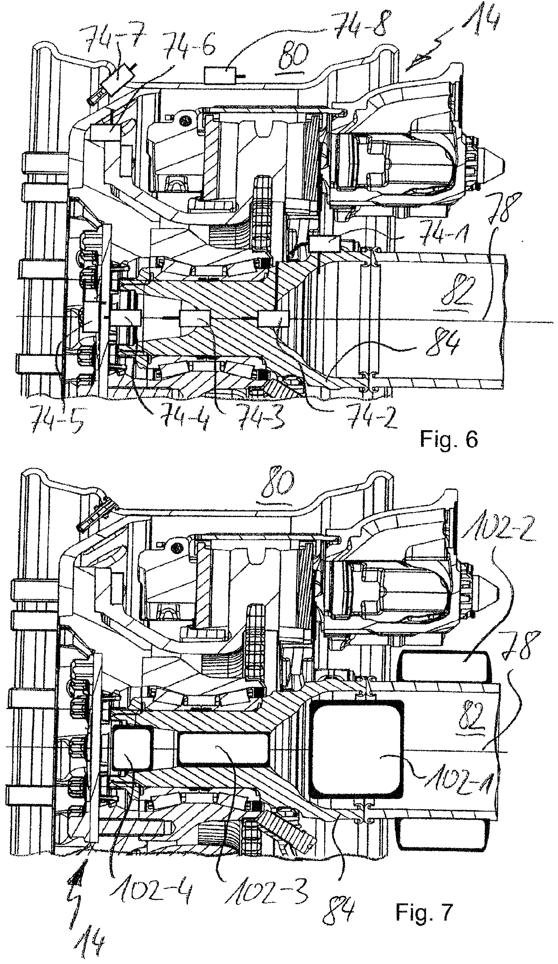

FIG. 6 veranschaulicht beispielhafte Anordnungen, der Verdichtereinheit 74. Dies kann grundsätzlich eine Anordnung an der Trägerseite 82 umfassen, vgl. die Verdichtereinheiten 74-1, 74-2 und 74-3. Alternativ können die Verdichtereinheiten 74 auch an der Radkörperseite 80 angeordnet sein, vgl. die Bezugszeichen 74-4, 74-5, 74-6, 74-7 und 74-8. Insbesondere ist auch eine Anordnung am Felgenbett des Felgenkörpers 92, also "im" Reifen vorstellbar. Dies kann erforderliche Leitungswege weiter verringern, vgl. auch die Bezugszeichen 74-7 und 74-8. Die Verdichtereinheiten 74-2, 74-3, 74-4 und 74-5 sind koaxial zur Achse 78 angeordnet. Die Verdichtereinheit 74-6, 74-7 und 74-8 sind von der Achse 78 versetzt, insbesondere exzentrisch versetzt zu dieser angeordnet.

FIG. 7 veranschaulicht verschiedene Möglichkeiten zur Anordnung von Puffereinheiten 102. Die Puffereinheiten können insbesondere als Akkumulatoreinheiten oder Kondensatoreinheiten ausgestaltet sein und mit der Verdichtereinheit 74 gekoppelt sein. Insbesondere können die Puffereinheiten 102 einen Motor der Verdichtereinheit 74 antreiben, der einen Kompressor antreiben kann. Mit 102-1 ist eine Anordnung einer Puffereinheit im Achskörper 84 angedeutet. Auch die Bezugszeichen 102-3 und 102-4 kennzeichnen eine derartige Anordnung. Mit 102-2 ist eine weitere trägerseitige Anordnung der Puffereinheit angedeutet. Die Puffereinheit 102-2 ist jedoch außerhalb des Achskörpers 84 an diesem aufgenommen. Insbesondere kann eine Mehrzahl von Puffereinheiten 102-2 winkelversetzt außen am Achskörper 84 aufgenommen sein. Es kann grundsätzlich bevorzugt sein, dass die Puffereinheiten 102 am Achskörper 84, also an der Trägerseite 82 aufgenommen sind. Es sind jedoch auch Gestaltungen denkbar, bei denen auch die Puffereinheiten 102 an der Radkörperseite 80 aufgenommen sind.

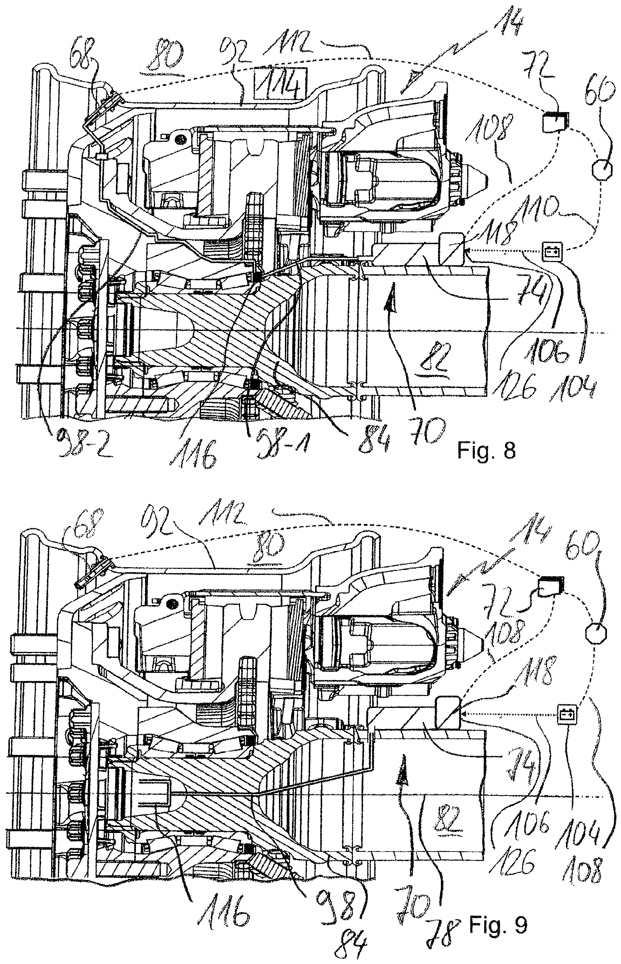

FIG. 8 zeigt eine erste Ausgestaltung einer dezentralen Druckmittelversorgungseinrichtung 70. Die Druckmittelversorgungseinrichtung 70 weist einen Verdichter 74 auf, der außen am Achskörper 84 aufgenommen ist. Der Verdichter 74 ist über einen Druckmittelpfad 98 mit dem Ventil 68 verbunden. Der Verdichter 74 kann eine Puffereinheit 102 aufweisen (in FIG. 8 nicht mehr dargestellt). Dem Verdichter 74 kann einen Motor 1 18 zugeordnet sein. Der Motor 1 18 kann den Verdichter 74 antreiben. Der Verdichter 74 ist mit einer Energiebereitstellungseinheit 104 koppelbar. Hierbei kann es sich etwa um das Bordspannungsnetz des Fahrzeugs handeln. Die Energiebereitstellungseinheit 104 ist über einen Energieversorgungspfad 106 mit dem Verdichter 74 verbindbar. Zu diesem Zweck kann beim Verdichter 74 ein Versorgungsanschluss 126 ausgebildet sein. Der Verdichter 74 kann ferner über eine Steuerleitung 108 mit einem Steuerelement 72 bzw. mit einer Steuereinheit 70 gekoppelt sein. Die Steuereinheit 70 kann über weitere Leitungen 1 10, 1 12 mit weiteren Komponenten der Radeinheit 14 verbunden sein. Beispielhaft kann die Steuereinheit 60 über eine Steuerleitung 1 10 mit der Energiebereitstellungseinheit 104 gekoppelt sein, um mit dieser zu kommunizieren. Ferner ist es vorstellbar, dass das Ventil 68, insbesondere ein felgenseitiger Drucksensor 1 14 über eine Meldeleitung 1 12 mit dem Steuerelement 72 bzw. der Steuereinheit 60 verbunden ist. Es versteht sich, dass zumindest die Leitungen 108, 1 10, 1 12 grundsätzlich kabelgebunden, alternativ jedoch zumindest teilweise auch schnurlos ausgestaltet sein können.

Auch die Energieübertragung über den Energieversorgungspfad 106 kann grundsätzlich kabelgebunden bzw. leitergebunden erfolgen. Es ist jedoch auch vorstellbar, im Energieversorgungspfad 106 zumindest abschnittsweise eine kontaktlose Energieübertragung bereitzustellen.

Die Druckmittelversorgungseinrichtung 70 weist ferner einen Dreh-Fest-Übergang 1 16 auf, der vorliegend beispielhaft im Druckmittelpfad 98 vorgesehen ist. Demgemäß ist ein erster Abschnitt 98-1 des Druckmittelpfads auf der Trägerseite 82 angeordnet. Ein zweiter Abschnitt 98-2 des Druckmittelversorgungspfads ist auf der Radkörperseite 80 angeordnet.

Die nachfolgend an der FIG. 9 bis 29b veröffentlichten Ausgestaltungen der Druckmittelversorgungseinrichtung 70 können von ihrem Grundaufbau her grundsätzlich der Gestaltung gemäß FIG. 8 ähnlich ausgebildet sein. Dies kann insbesondere die Kommunikation und Datenübermittlung mit der Steuereinheit 60 und dem Steuerelement 72 betreffen. Auch ein Energieversorgungspfad 106, der an eine Energiebereitstellungseinheit 104 koppelbar ist, ist bei vielen der nachfolgend zu erläuternden Ausgestaltungen denkbar. Es wird daher nachfolgend auf die vorbeschriebenen Komponenten nicht unbedingt detailliert eingegangen werden.

FIG. 9 zeigt eine alternative Ausgestaltung einer Druckmittelversorgungseinrichtung 70. Die Verdichtereinheit 74 ist außen am Achskörper 84 angeordnet. Von dort wird der Druckmittelpfad 98 zunächst in Richtung auf die Achse 78 geführt und mündet an einem axialen Ende des Achskörpers 84 in einen Dreh-Fest-Übergang 1 16. Der weitere Verlauf des Druckmittelpfads 98 kann etwa gemäß den FIG. 4 oder 5 gestaltet sein.

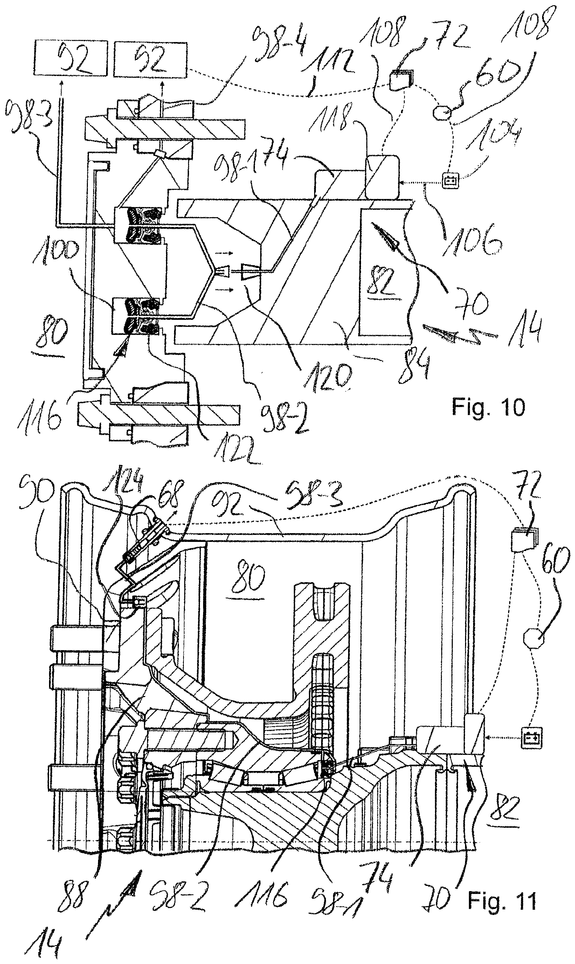

FIG. 10 zeigt eine weitere Ausgestaltung einer weiteren Druckmittelversorgungseinrichtung 70. Es wird eine nähere Gestaltung des Dreh-Fest-Übergangs 1 16 veranschaulicht. Der Druckmittelpfad 98 weist einen ersten Abschnitt 98-1 auf, der an einem axialen Ende des Achskörpers 84 in ein axiales Koppelventil 120 mündet. An das Koppelventil 120 kann sich ein Abschnitt 98-2 anschließen, der einem Drehdurchgang zugeordnet ist. Dies kann beispielhaft über eine Dichtung 122 erfolgen, die zumindest teilweise für den Druckmittelpfad 98-2 durchlässig ist. Die Dichtung 122 kann als trägerseitig festgelegte Dichtung 122 bezeichnet werden. Die Dichtung kann einen umlaufenden Spalt 100 abdichten, so dass dieser lediglich über den Druckmittelpfad 98-2 beströmt werden kann. An den Spalt 100 können sich alternativ die Abschnitte 98-3, 98-4 des Druckmittelpfads anschließen, die in den Felgenkörper 92 münden können.

FIG. 11 veranschaulicht eine weitere Ausgestaltung einer Druckmittelversorgungseinrichtung 70. Die Verdichtereinheit 74 ist außen am Achskörper 84 angeordnet. Der Druckmittelpfad 98 wird in Richtung auf das Ventil 68 geführt. Der Druckmittelpfad 98 weist verschiedene Abschnitte 98-1, 98-2, 98-3 auf. Zwischen den Abschnitten 98-1 und 98-2 ist ein Dreh-Fest-Übergang 1 16 angeordnet. Dieser kann etwa eine Gestaltung mit dem Lager 122 gemäß FIG. 10 umfassen. Zwischen den Abschnitten 98-2 und 98-3 kann ein exzentrisch angeordnetes Koppelventil 124 angeordnet sein. Das Koppelventil 124 kann einen Wechsel des Reifens 16 bzw. des Felgenkörpers 92 vereinfachen. Wenn der Felgenkörper 92 von der Radaufnahme 90 abgenommen ist, kann sich das Koppelventil 124 verschließen, um ein Eindringen von Schmutz in den Druckmittelpfad 98 zu verhindern.

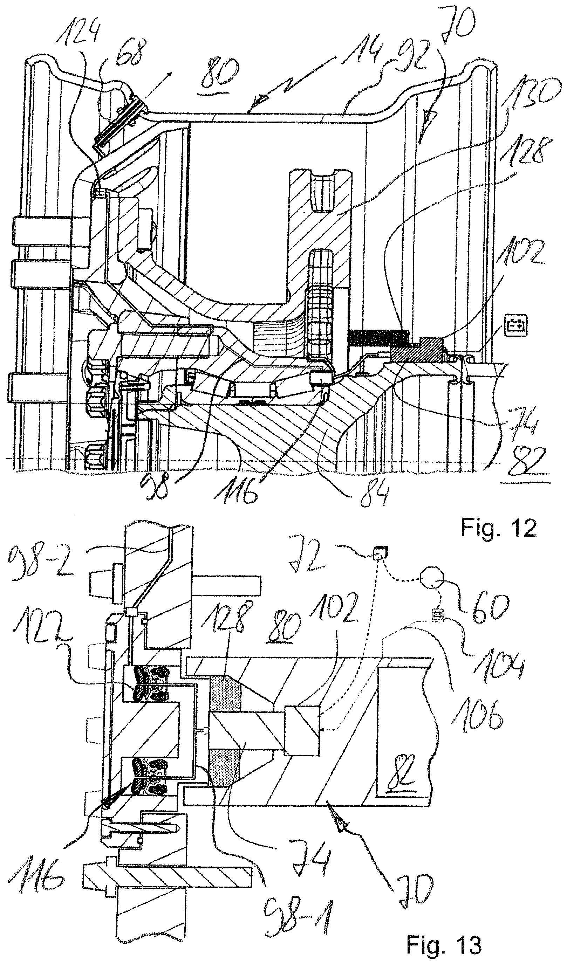

FIG. 12 zeigt eine weitere Ausgestaltung einer Druckmittelversorgungseinrichtung 70. Von ihrem Grundaufbau her kann die Druckmittelversorgungseinrichtung 70 grundsätzlich ähnlich der Gestaltung gemäß FIG. 11 ausgebildet sein. Die Druckmittelversorgungseinrichtung 70 kann jedoch ferner mit einer Einrichtung zur Energieerzeugung verbunden sein. Beispielhaft kann an der Radkörperseite 80 ein Ausleger 130 ausgebildet sein, der gemeinsam mit dem Felgenkörper 92 relativ zum Achskörper 84 rotierbar ist. Am Ausleger 130 kann ein Rotor 128 angeordnet sein, der relativ zu einem Gegenpart (etwa einem Stator) beim Verdichter 74 verdrehbar ist. Beispielhaft können sowohl der Rotor 128 als auch die Verdichtereinheit 74 rotationssymmetrisch gestaltet sein und eine Kreisringform aufweisen. Mit anderen Worten kann bei dieser Gestaltung ein Generator verwirklicht sein, der beispielsweise während des Betriebs, also während der Fahrt, elektrische Energie bereitstellen kann, um etwa die Puffereinheit 102 aufzuladen.

FIG. 13 zeigt eine alternative Ausgestaltung einer Druckmittelversorgungseinheit 70, die ähnlich den Gestaltungen gemäß FIG. 1 1 und 12 ausgebildet ist. Auch bei der Gestaltung bis FIG. 13 ist ein Rotor 128 vorgesehen, der an der Radkörperseite 80 festgelegt ist. Der Rotor 128 kann während der Fahrt um den Verdichter 74 umlaufen. Auf diese Weise kann Energie bereitgestellt werden, etwa um die Puffereinheit 102 zu laden.

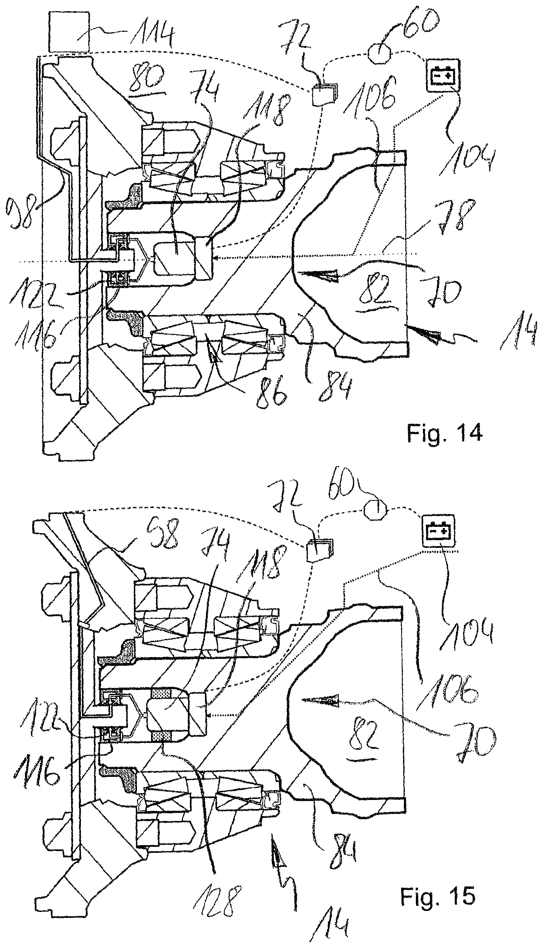

FIG. 14 zeigt eine weitere Ausgestaltung einer Druckmittelversorgungseinrichtung 70. Dies unterscheidet sich von einigen der voranstehend beschriebenen Ausgestaltungen im Wesentlichen dadurch, dass der Verdichter 74 mitsamt einem diesem zugeordneten Motor koaxial zur Achse 78 angeordnet ist. Der Dreh-Fest-Übergang 1 16 für den Druckmittelpfad 98 wird beispielhaft über eine Dichtung 122 mit zugehörigem Ringspalt 100 realisiert.

FIG. 15 zeigt eine der Gestaltung gemäß FIG. 14 sehr ähnliche Ausgestaltung einer Druckmittelversorgungseinrichtung 70. Im Unterschied zur Gestaltung gemäß 14 weist die Druckmittelversorgungseinrichtung 70 in FIG. 15 ferner einen Rotor 128 oder ein ähnliches Element zur Energieerzeugung auf, das mit dem Verdichter bzw. der Verdichtereinheit 74 zusammenwirkt. Ein weiterer Unterschied zwischen den Ausgestaltungen gemäß FIG. 14 und 15 kann sich beim Verlauf der Druckmittelpfade 98 ergeben. In FIG. 14 wird der Druckmittelpfad 98 außerhalb einer Radkappe in Richtung auf den Felgenkörper 92 geführt. Bei der Gestaltung mit FIG. 15 wird der Druckmittelpfad 98 von einer Radkappe verdeckt in Richtung auf den Felgenkörper 92 geführt.

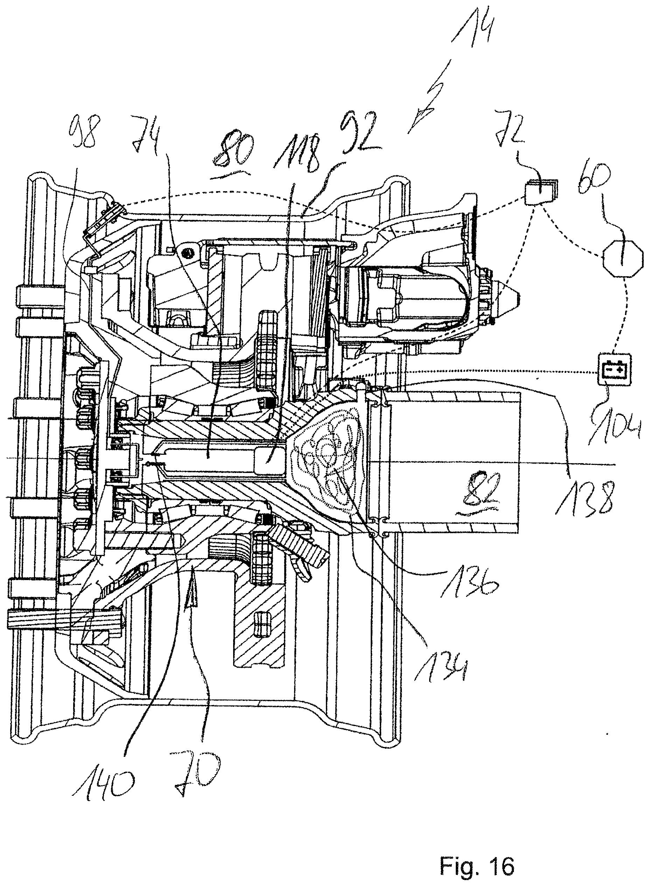

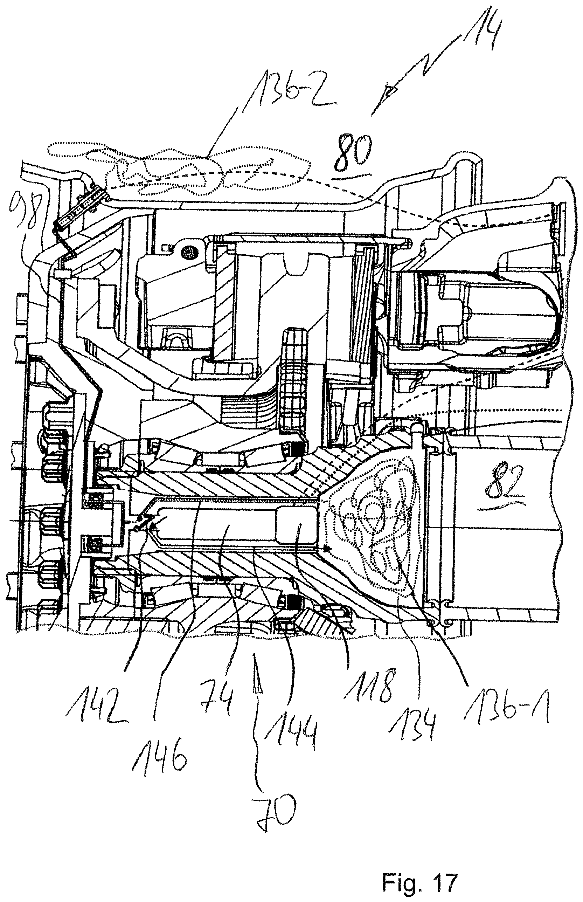

FIG. 16 veranschaulicht eine weitere Ausgestaltung einer Druckmittelversorgungseinrichtung 70. Diese Gestaltung zeichnet sich im Wesentlichen dadurch aus, dass ferner ein Reservoir 134 für ein Reifendichtmittel oder Dichtmittel 136 beim Achskörper 84 vorgesehen ist. FIG. 17 veranschaulicht eine etwas vergrößerte Darstellung dieser Gestaltung. Es ist ferner eine Ventilanordnung 140 vorgesehen, um das Reservoir 134 mit dem Dichtmittel 136 bei Bedarf gezielt ansteuern zu können. Auf diese Weise kann das Dichtmittel 136 durch den Druckmittelpfad 98 in den Reifen 16 eingebracht werden, um diesen abzudichten, vgl. auch Bezugszeichen 136-2 in FIG. 17. Das Reservoir 134 weist ferner einen Befüllanschluss 138 auf.

In FIG. 16 ist die Ventilanordnung 140 in einer geschlossenen bzw. getrennten Stellung gezeigt. Demgemäß wirkt die Verdichtereinheit 74 grundsätzlich als Druckluftbereitstellungseinheit, ohne das Reservoir 134 mit dem Dichtmittel 136 unter Druck zu setzen. Die kann auch als Normalbetrieb bzw. als Normal-Druckluftregelbetrieb bezeichnet werden. Sofern jedoch ein plötzlicher Druckabfall oder gar ein Reifenschaden detektiert wird, kann die Ventilanordnung 140 angesteuert werden. Zu diesem Zweck ist beispielhaft ein Schaltventil 142 vorgesehen, vgl. auch FIG. 17. Das Schaltventil 142 kann umgeschaltet werden und aktiviert auf diese Weise einen Treibmittelpfad 144. Mit anderen Worten wird Druckmittel, das vom Verdichter bzw. der Verdichtereinheit 74 bereitgestellt wird, umgelenkt. Das Druckmittel strömt durch den Treibmittelpfad 144 in das Reservoir 134 und setzt das Dichtmittel 136 unter Druck. Demgemäß wird das Dichtmittel 136 über den Dichtmittelpfad 146 in Richtung auf den Druckmittelpfad 98 und schlussendlich in den Reifen 16 gefördert.

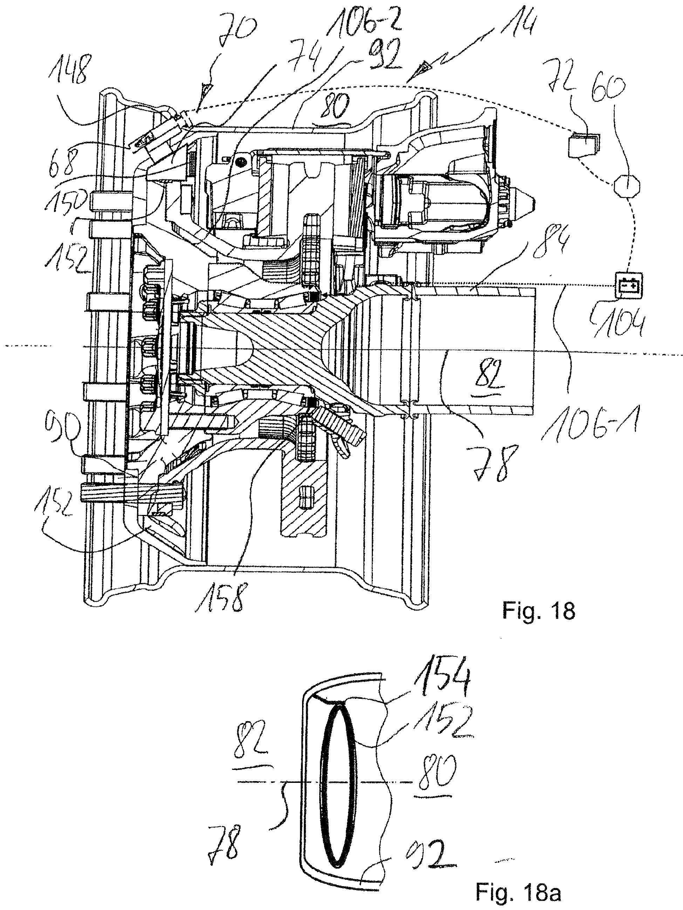

FIG. 18 veranschaulicht eine weitere alternative Ausgestaltung einer Druckmittelversorgungseinrichtung 70. Die Verdichtereinheit 74 ist bei dieser Gestaltung am Felgenkörper 92 bzw. an dessen Radkranz 94 angebracht. Auf diese Weise kann ein erforderlicher Druckmittelpfad 98 besonders kurz ausfallen. Insbesondere kann die Verdichtereinheit 74 über einen Ventilanschluss 148 parallel an das Ventil 68 bzw. dessen Aufnahme angekoppelt sein. Auf diese Weise ist das Ventil 68 weiterhin für externe Druckregelvorgänge erreichbar. Die Verdichtereinheit 74 kann über eine Ansaugöffnung 150 Luft ansaugen und verdichten. Die Ansaugöffnung 150 kann auch zu Kühlungszwecken dienen. Die Verdichtereinheit 74 kann mit einem Elektromotor versehen sein (in FIG. 18 nicht näher dargestellt).

Zur Energieversorgung der Verdichtereinheit 74 ist diese über den Energieversorgungspfad 106 mit einer Energiebereitstellungseinheit 104 verbunden. Der Energieversorgungspfad 106 kann zwei Abschnitte 106-1, 106-2 aufweisen. Der Abschnitt 106-1 ist der Trägerseite 82 zugeordnet. Der Abschnitt 106-2 ist der Radkörperseite 80 zugeordnet. Die Kontaktierung zwischen der Trägerseite 82 und der Radkörperseite 80 kann über einen Dreh-Fest-Übergang 158 erfolgen. Dieser kann beispielhaft einen Schleifringkontakt umfassen. Ein weiterer Kontakt, der als Ringkontakt ausgebildet ist (Bezugszeichen 152), ist zur Kontaktierung der Verdichtereinheit 74 vorgesehen, vgl. hierzu auch FIG. 18a. Es ist von Vorteil, den Kontakt 152 als umlaufenden Ringkontakt auszuführen. Auf diese Weise kann der Felgenkörper 92 in beliebiger (Dreh-)Orientierung an der Radaufnahme 90 befestigt werden. Ein Kontaktelement bzw. eine Kontaktfeder 154 kann dann den Ringkontakt 152 kontaktieren.

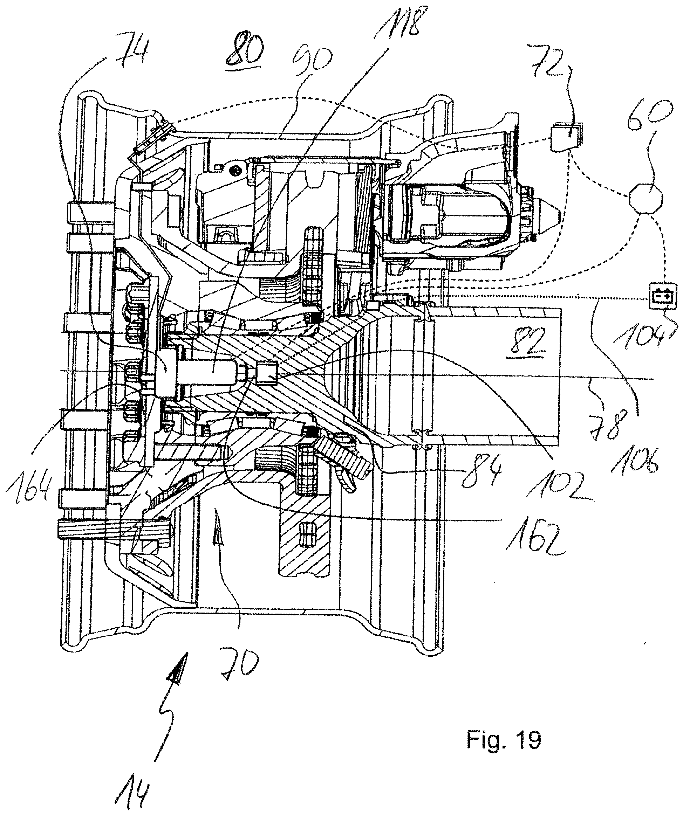

FIG. 19 veranschaulicht eine weitere Ausgestaltung einer Druckmittelversorgungseinrichtung 70. Die Verdichtereinheit 74 ist koaxial zur Achse 78 angeordnet und an der Radkörperseite 80 festgelegt. Demgemäß verdreht sich die Verdichtereinheit 74 gemeinsam mit der Radkörperseite 80 relativ zur Trägerseite 82. Eine Kontaktierung der Verdichtereinheit 74, insbesondere eines Motors 1 18, der dieser zugeordnet ist, kann über einen Aktor 162 erfolgen, der beispielsweise einen Stellmotor umfasst. Eine Kontaktierung kann beispielhaft über Schleifringe oder in ähnlicher Weise erfolgen. Die Kontaktierung kann beispielsweise einen Kontakt mit einer Puffereinheit 102 herstellen. Diese Gestaltung hat den wesentlichen Vorteil, dass nur dann, wenn Energie benötigt wird, also etwa dann, wenn ein Luftdruckregelvorgang eingeleitet wird, ein Kontakt hergestellt wird. Auf diese Weise kann sich der Verschleiß der Kontaktelemente in Grenzen halten. Die Verdichtereinheit 74 ist ferner über einen externen Anschluss 164 mit einer externen Energieversorgung koppelbar. Auf diese Weise kann ein Notbetrieb der Verdichtereinheit 74 und der Druckmittelversorgungseinrichtung 70 bewirkt werden.

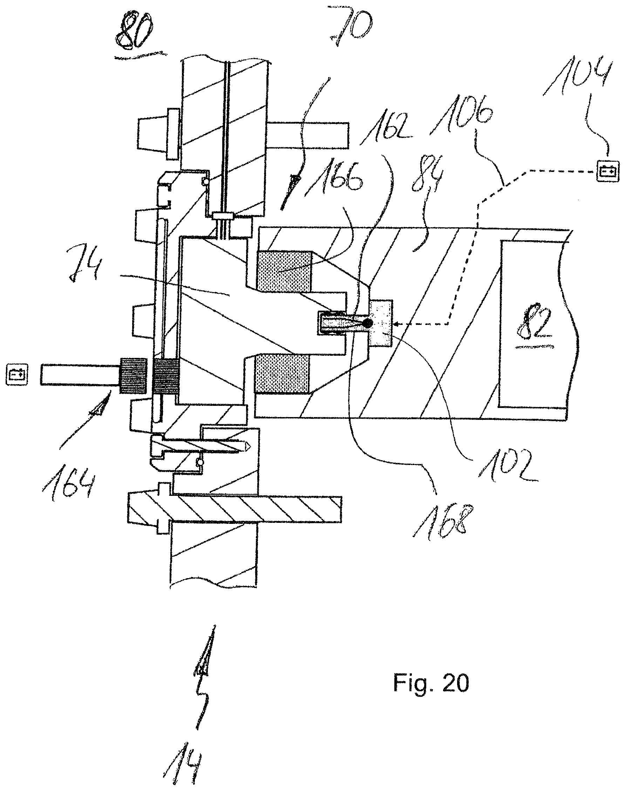

FIG. 20 zeigt eine weitere Ausgestaltung einer Druckmittelversorgungseinrichtung 70. Die Verdichtereinheit 74 ist an der Radkörperseite 80 aufgenommen und kann sich relativ zur Trägerseite 82 verdrehen. An der Trägerseite 82 ist am Achskörper 84 ein Stator 166 aufgenommen, der gemeinsam mit der (dann als Rotor fungierenden) Verdichtereinheit 74 generatorisch zur Energiebereitstellung zusammenwirken kann. Auch die Verdichtereinheit 74 kann ferner über einen Aktor 162 selektiv aktiviert oder deaktiviert werden, der Kontaktelemente 168 in Eingriff oder außer Eingriff mit der Verdichtereinheit 74 bringen kann. Der externe Anschluss 164 kann beispielsweise mit einem externen Anschlusskabel zur Energieversorgung kontaktiert werden.

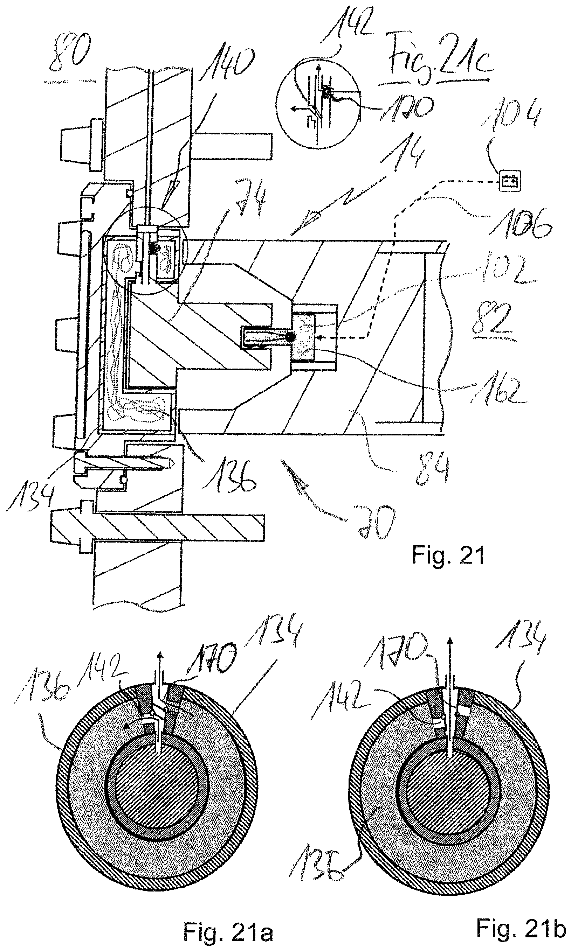

FIG. 21 veranschaulicht eine weitere Ausgestaltung einer Druckmittelversorgungseinrichtung 70, bei der die Verdichtereinheit 74 an der Radkörperseite 80 aufgenommen ist. Die (selektive) Kontaktierung und Aktivierung kann etwa gemäß FIG. 20 erfolgen. Ferner ist der Verdichtereinheit 74 auch ein Reservoir 134 für ein Dichtmittel 136 zugeordnet, das ebenso bei der Radkörperseite 80 angeordnet ist.

Die FIG. 21 a, 21 b und 21 c veranschaulichen eine Ventilanordnung 140 zur selektiven Ansteuerung und Aktivierung des Reservoirs 134 mit dem Dichtmittel 136. Die Ventilanordnung 140 kann mit einem Schaltventil 142 und einem Freigabeventil 170 versehen sein. Das Schaltventil 142 kann aktiviert werden, sofern die Bereitstellung von Dichtmittel 136 im Reifen 16 gewünscht wird. Einen solchen aktivierten Zustand veranschaulicht FIG. 21 a. FIG. 21 b veranschaulicht einen deaktivierten Zustand, der einem Normal-Zustand gleichkommt. Im aktivierten Zustand leitet das Schaltventil 142 das Druckmittel in das Reservoir um, um das Dichtmittel 136 unter Druck zu setzen und durch das Ventil 170 in Richtung auf den Druckmittelpfad 98 und den Reifen 16 zu fördern.

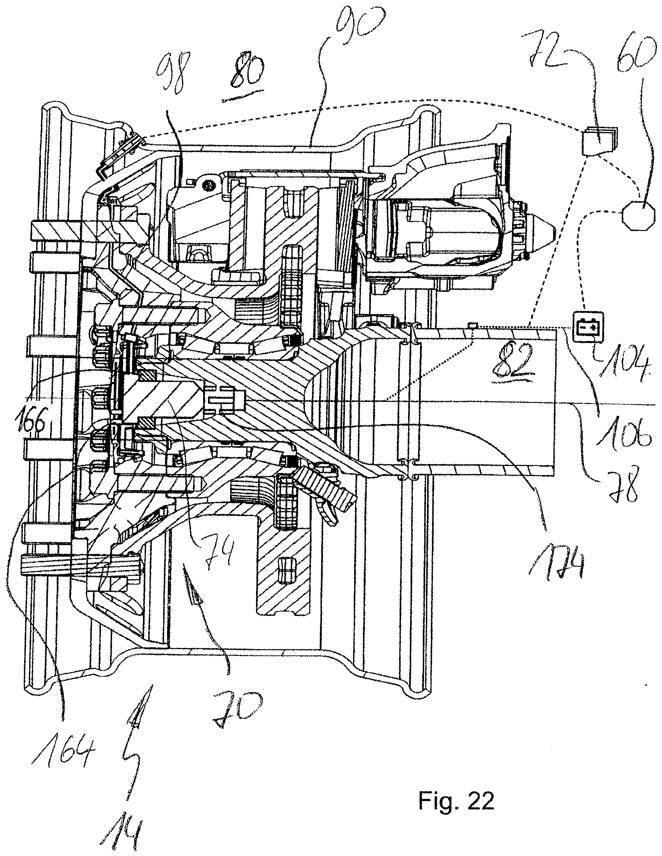

FIG. 22 veranschaulicht eine weitere Ausgestaltung einer Druckmittelversorgungseinrichtung 70. Die Druckmittelversorgungseinrichtung 70 weist einen besonders gestalteten Dreh-Fest-Übergang auf, der als berührloser Kontakt 174 gestaltet ist. Der Kontakt kann mit anderen Worten zur kontaktlosen Energieübertragung ausgestaltet sein. Dies kann etwa induktiv, kapazitiv oder elektromagnetisch erfolgen. Auf diese Weise gibt es beim Dreh-Fest-Übergang keine unmittelbar miteinander (mechanisch) im Eingriff stehenden Teile. Dies kann sich vorteilhaft auf das Verschleißverhalten auswirken. Ferner ist der Verdichtereinheit 74 trägerseitig ein Stator 166 zugeordnet, über den ggf. im Betrieb Energie erzeugt werden kann. Schließlich weist die Druckmittelversorgungseinrichtung 70 ferner einen externen Anschluss 164 auf.

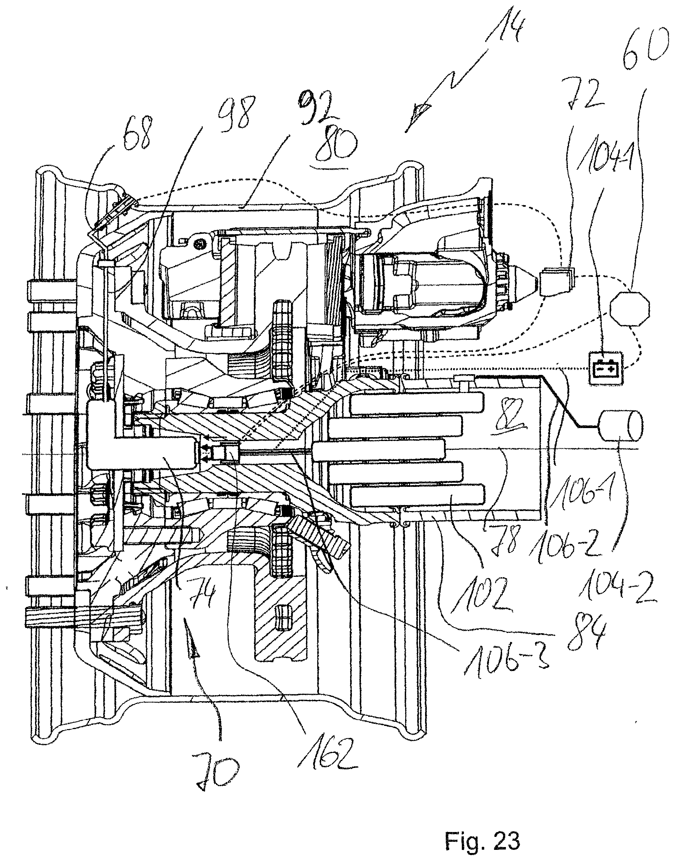

FIG. 23 veranschaulicht eine weitere Gestaltung einer Druckmittelversorgungseinrichtung 70. Die Verdichtereinheit 74 der Druckmittelversorgungseinrichtung 70 ist an der Radkörperseite 80 angeordnet und über einen Aktor 162 selektiv kontaktierbar. Die Verdichtereinheit 74 weist eine L-förmige Gestalt auf. Auf Seiten des Achskörpers 84 ist der Verdichtereinheit 74 eine Puffereinheit 102 zugeordnet, die beispielsweise eine Mehrzahl von Akkumulatorzellen aufweist. Diese sind im Achskörper 84 aufgenommen. Ferner ist die Verdichtereinheit 74 über Energieversorgungspfade 106-1, 106-2 mit Energiebereitstellungseinheiten 104-1, 104-2 verbindbar. Bei der Energiebereitstellungseinheit 104-1 kann es sich etwa um eine fahrzeugseitige Batterie handeln. Bei der Energiebereitstellungseinheit 104-2 kann es sich etwa um eine fahrzeugseitige Lichtmaschine handeln. Die Puffereinheit 102 ist über einen Energieversorgungspfad 106-3 selektiv mit der Verdichtereinheit 74 verbindbar.

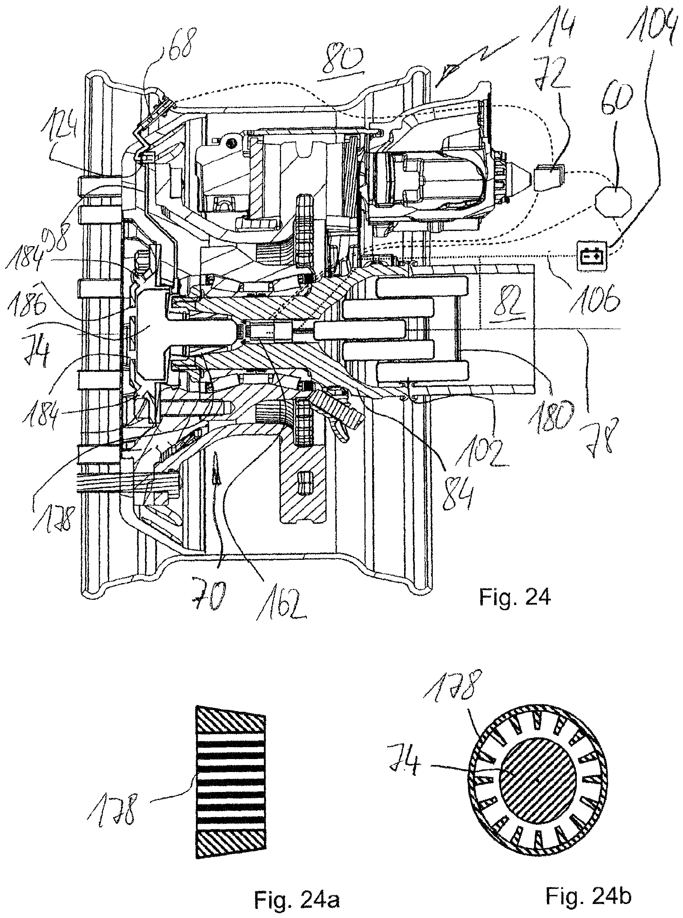

FIG. 24 veranschaulicht eine weitere Ausgestaltung einer Druckmittelversorgungseinrichtung 70. Diese ist hinsichtlich ihres Grundaufbaus etwa ähnlich der Ausgestaltung gemäß FIG. 23 ausgebildet. Die Verdichtereinheit 74 ist konzentrisch gestaltet und angeordnet. Die Verdichtereinheit 74 ist über einen Aktor 162 selektiv ankoppelbar, wenn ein Regelungsbedarf besteht. Ferner ist auf der Radkörperseite 80 außen eine Kappe 186 vorgesehen, die eine Mehrzahl von Ausnehmungen 184 aufweist. Die Kappe 186 mit den Ausnehmungen 184 kann Kühlluftöffnungen für die Verdichtereinheit 74 bereitstellen. Der Achskörper 84 weist eine konische Vertiefung an seinem der Verdichtereinheit 74 zugewandten Ende auf. Dort kann ein Kühlkörper 178 angeordnet sein, der tragerseitig festgelegt ist, um die (sich drehende) Verdichtereinheit 74 zu kühlen. FIG. 24a zeigt einen seitlichen Schnitt durch den Kühlkörper 178. FIG. 24b zeigt einen Axialschnitt durch den Kühlkörper 178 und die Verdichtereinheit 74. Ferner weist die Gestaltung gemäß FIG. 24 ein Koppelventil 124 auf, wie vorstehend bereits beschrieben.

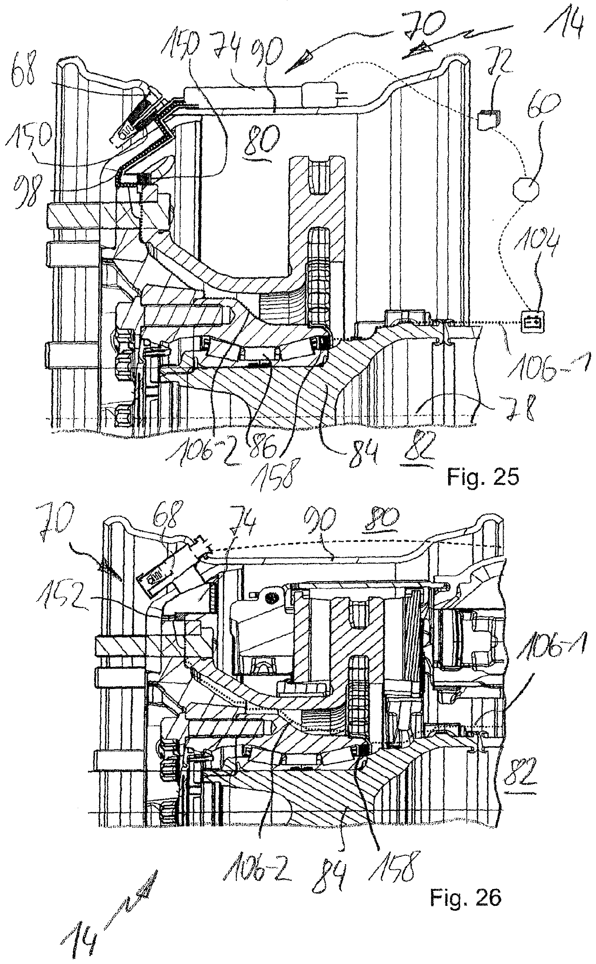

FIG. 25 veranschaulicht eine weitere Ausgestaltung einer Druckmittelversorgungseinrichtung 70, bei der die Verdichtereinheit 74 am Felgenkörper 92 festgelegt ist, also "im" Reifen 16. Demgemäß kann der Druckmittelpfad 98 insbesondere zur Ansaugung von Luft genutzt werden, vgl. auch die mit 150 bezeichnete Ansaugung, die auch zur Zuführung von Kühlluft nutzbar ist. Ein erforderlicher Energieversorgungspfad ist in FIG. 25 durch die Abschnitte 106-1, 106-2 dargestellt. Der Dreh-Fest-Übergang 158 kann sich beim Radlager 86 zwischen der Trägerseite 82 und der Radkörperseite 80 ergeben. Die Verdichtereinheit 74 kann grundsätzlich parallel zum Ventil 68 vorgesehen sein.

FIG. 26 veranschaulicht eine weitere alternative Ausgestaltung einer Druckmittelversorgungseinrichtung 70, die grundsätzlich etwa gemäß FIG. 25 gestaltet ist. Die Verdichtereinheit 74 ist hierbei jedoch nicht unmittelbar "im" Reifen 16 angeordnet, sondern "außerhalb" des Reifens 16 am Felgenkörper 92 im Bereich des Ventils 68. Gemeinsam können die Verdichtereinheit 74 und das Ventil 68 eine Einheit bilden. Demgemäß kann sich der Druckmittelpfad 98, der zur Ansaugung von Luft erforderlich ist, noch weiter verkürzen. Die entsprechende Kontaktierung (vgl. den Energieversorgungspfad 106-1, 106-2) kann über einen Ringkontakt 152 in grundsätzlich vorbeschriebener Weise erfolgen.

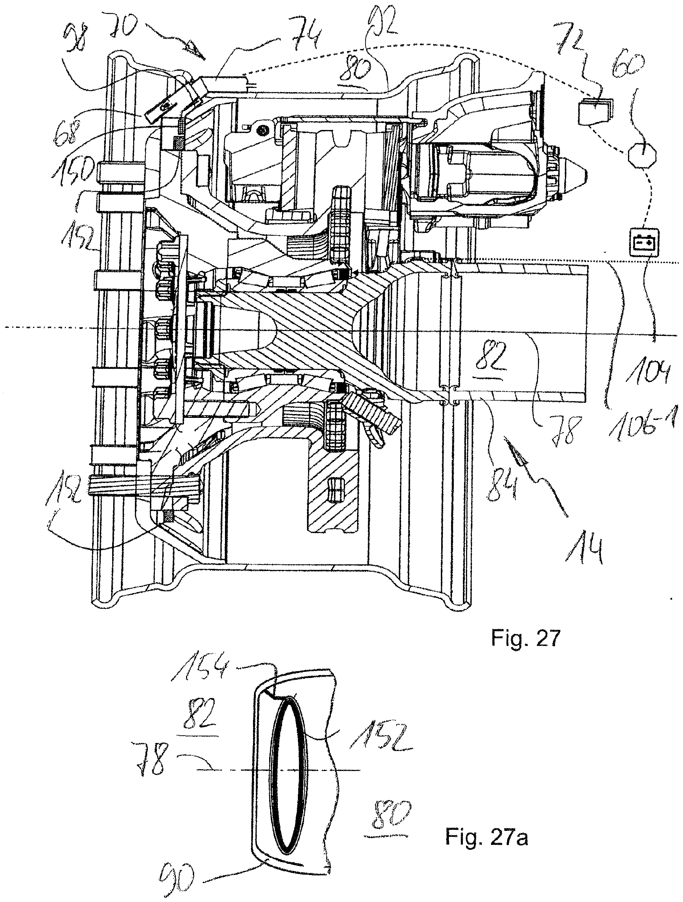

FIG. 27 veranschaulicht eine weitere alternative Ausgestaltung einer Druckmittelversorgungseinrichtung 70. Die Verdichtereinheit 74 ist ähnlich der Gestaltung gemäß FIG. 25 am Felgenkörper 92 "im" Reifen 16 angeordnet. Eine Kontaktierung kann in bekannter Weise über einen Ringkontakt 152 erfolgen, vgl. auch FIG. 27a. Ein beim Felgenkörper 92 ausgebildetes Kontaktelement 154 kann den Ringkontakt 152 kontaktieren.

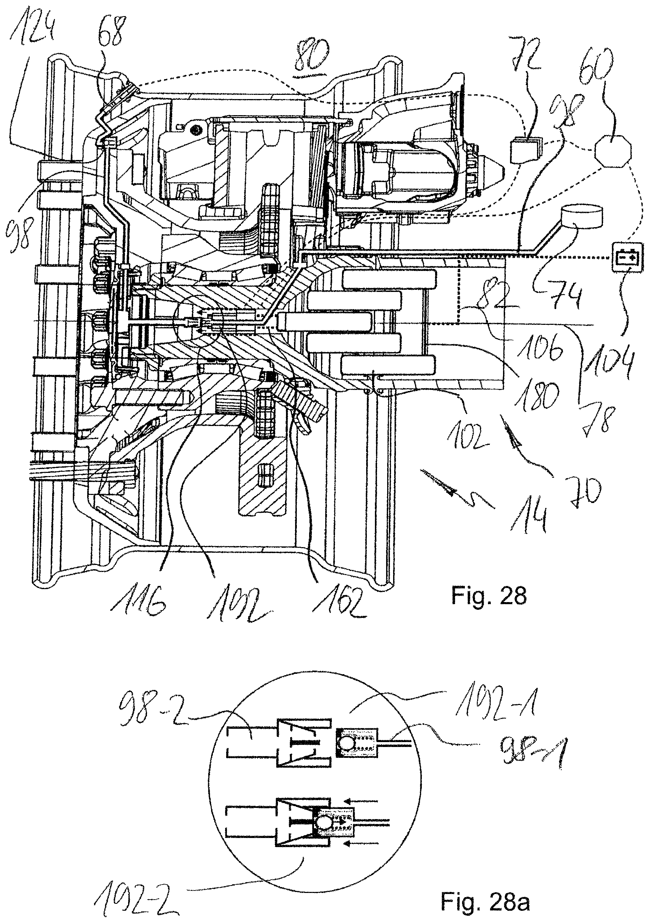

FIG. 28 veranschaulicht eine weitere Ausgestaltung einer Druckmittelversorgungseinrichtung 70. Die Gestaltung gemäß FIG. 28 weist einen Dreh-Fest-Übergang 1 16 im Druckmittelpfad 98 auf. Zur selektiven Kopplung oder Schaltung des Druckmittelpfads 98 ist ein druckgesteuertes Ventil 192 vorgesehen, vgl. Auch FIG. 28a. Eine mit 192-1 bezeichnete Schaltstellung in FIG. 28a veranschaulicht einen getrennten Zustand. Eine mit 192-2 bezeichnete Darstellung in FIG. 28a veranschaulicht einen geschlossenen Zustand. Die Aktivierung des Ventils 192 kann über den anliegenden Druck erfolgen.

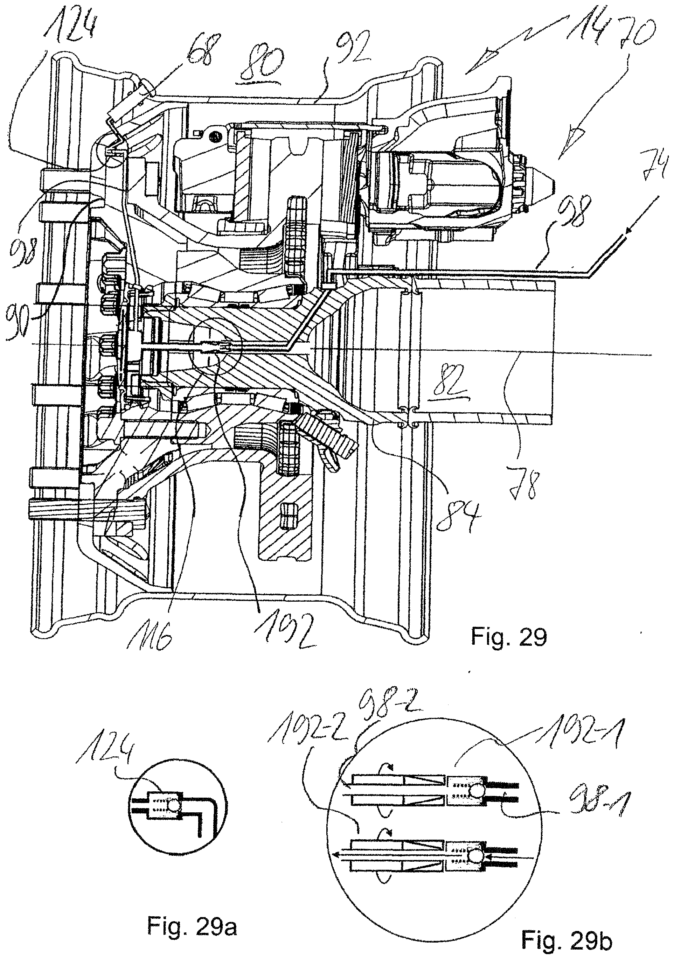

FIG. 29 veranschaulicht eine weitere Ausgestaltung einer Druckmittelversorgungseinrichtung 70. Auch bei der Gestaltung gemäß FIG. 29 ist ein druckgesteuertes Ventil 192 vorgesehen, vgl. auch FIG. 29b. Eine Offen-Stellung ist mit 192-1 bezeichnet. Eine Geschlossen-Stellung ist mit 192-2 bezeichnet. FIG. 29a veranschaulicht ferner einen beispielhaften schematischen Schnitt durch das Koppelventil 124, das eine Montage bzw. Demontage des Felgenkörpers 92 an der Radaufnahme 90 vereinfachen kann.

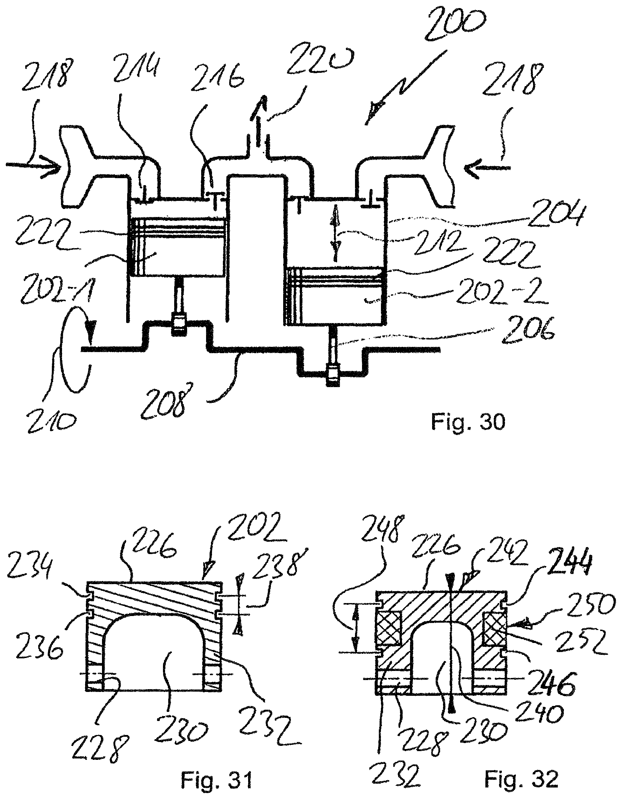

Mit Bezugnahme auf FIG. 30 und 31 wird eine beispielhafte Ausgestaltung eines Kolbenkompressors 200 erläutert. Kolbenkompressoren 200 weisen üblicherweise zumindest eine Paarung aus einem Kolben 202 und einem entsprechenden Zylinder 204 auf, die aneinander angepasst sind. Kolbenkompressoren 200 können hinsichtlich ihrer Grundkonfiguration bekannten Verbrennungsmotoren zumindest ähnlich gestaltet sein. Demgemäß sind selbstverständlich auch Mehrkolbenkompressoren 200 vorstellbar, die etwa zwei, drei oder vier entsprechende Kolben-Zylinder-Paarungen aufweisen. Ferner sind Anordnungen der Kolben-Zylinder-Paarungen in Reihe, in V-Form, in Sternform oder dgl. denkbar. Der in FIG. 30 lediglich zu Veranschaulichungszwecken stark vereinfacht schematisch dargestellte Kolbenkompressor 200 weist beispielhaft zwei Kolben 202-1, 202-2 auf, die in Reihe angeordnet sind. Die Kolben 202 sind jeweils über ein Pleuel 206 mit einer Antriebswelle 208 gekoppelt, die etwa nach Art einer Kurbelwelle gestaltet sein kann. Eine Rotationsbewegung (Pfeil 210) der Antriebswelle 208 erzeugt eine längsoszillatorische Bewegung (Pfeil 212) der Kolben 201 -1, 202-2 in ihren Zylindern 204. Die Antriebswelle 208 weist entsprechende Versatzabschnitte auf, so dass die Kolben 202-1, 202-2 exzentrisch an dieser aufgenommen sind.

Die Kolben 202-1, 202-2 können sich demgemäß in ihren Zylindern 204 auf und ab bewegen. Eine Richtung der Bewegung, wenn sich die Kolben 202 in Richtung der Antriebswelle 208 bewegen, kann als Ansaugbewegung oder Ansaughub bezeichnet werden. Die entgegengerichtete Bewegung, bei der sich die Kolben 202-1, 202-2 von der Antriebswelle 208 wegbewegen, kann als Kompressionsbewegung bzw. Kompressionshub bezeichnet werden. Während der Ansaugbewegung können die Kolben 202 über einen Einlass 218 ein Fluid, insbesondere Luft, ansaugen. Zu diesem Zweck kann beispielhaft ein Einlassventil 214 vorgesehen sein, das (aus Sicht des Kolbens 202) geöffnet wird, wenn durch den Kolben 202 ein Unterdruck im Zylinder 204 erzeugt wird. Bei der entgegengesetzten Richtung des Kolbens 202 wird die angesaugte Luft bzw. das angesaugte Fluid komprimiert. Auf diese Weise kann an einem Auslass 220 das unter Druck gesetzte Fluid, insbesondere Druckluft, bereitgestellt werden. Zu diesem Zweck können ferner entsprechende Auslassventile 216 vorgesehen sein, die (aus Sicht des Kolbens 202) bei entsprechendem Überdruck geöffnet werden können.

Die Bewegung zwischen dem Kolben 202 und dem Zylinder 204 bzw. den Zylinderwänden ist üblicherweise verschleißbehaftet. Zur Verringerung der Reibkräfte ist üblicherweise bei der Paarung Kolben-Zylinder ein definiertes Spiel vorgesehen. Um eine hinreichend gute Abdichtung zu bewirken, ist häufig ferner eine Dichtungsanordnung 222 vorgesehen, die beispielhaft einen oder mehrere Kolbenringe umfasst.

Der Kolben 202 weist einen Kolbenboden 226 auf, der von der Antriebswelle 208 abgewandt ist. Ferner weist der Kolben 202 an seiner vom Kolbenboden 226 abgewandten Seite eine Vertiefung auf, die allgemein auch als Kolbentasche 230 bezeichnet werden kann. Eine die Kolbentasche 230 umschließende Umfangswandung des Kolbens wird allgemein auch als Kolbenhemd 232 bezeichnet. In diesem Bereich weist der Kolben ferner Durchgangslöcher bzw. Durchgangsbohrungen 228 auf, die zur Aufnahme eines Kolbenbolzens (in FIG. 31 nicht dargestellt) dienen. Der Kolbenbolzen dient üblicherweise zur Kopplung des Kolbens 202 mit einem Auge des entsprechenden Pleuels 206, das im gefügten Zustand in der Tasche 230 des Kolbens 202 angeordnet ist.

FIG. 31 zeigt einen seitlichen Schnitt durch einen Kolben 202, der etwa beim Kolbenkompressor 200 gemäß FIG. 30 verwendbar ist. Der Kolben 202 weist beispielhaft zwei Nuten 234, 236 auf, die auch als Ringnuten bezeichnet werden können. Die Nuten 234, 236 weisen zueinander einen Abstand 238 auf, der relativ gering ist. Jede der Nuten 234, 236 kann einen Kolbenring tragen. Demgemäß weist der beispielhaft in FIG. 31 gezeigte Kolben 202 im eingebauten Betriebszustand zwei Kolbenringe auf.

FIG. 32 zeigt eine vorteilhafte Weiterbildung eines Kolbens, der mit 242 bezeichnet ist. Im Hinblick auf den Grundaufbau sind die Kolben 202, 242 einander zumindest ähnlich gestaltet. Demgemäß weist auch der Kolben 242 einen Kolbenboden 226, entsprechende Bohrungen 228 für einen Kolbenbolzen sowie ein Kolbenhemd 232 auf, das eine Kolbentasche 230 umschließt.

Ferner weist der Kolben 242 beispielhaft zwei Nuten oder Ringnuten 244, 246 auf, die zur Aufnahme von Kolbenringen ausgebildet sind. Die Ringnuten 244, 246 weisen zueinander einen Abstand 248 auf, der wesentlich größer als der Abstand 238 des Kolbens 202 ist, der in FIG. 31 gezeigt wird. Beispielhaft kann der Abstand 248 zwischen den Ringnuten 244, 246 etwa zumindest 30 %, vorzugsweise zumindest 40 %, weiter bevorzugt zumindest 50 % einer Gesamtlänge 240 des Kolbenhemdes 232 betragen. Die Abschnitte 238, 240 können jeweils einem Abstand der Mitten der jeweiligen Ringnuten 234, 236 sowie 244, 246 entsprechen. Die Gesamtlänge 240 des Kolbens 242 bzw. des Kolbenhemdes 232 entspricht etwa der in FIG. 32 im seitlichen Schnitt gezeigten Erstreckung des Kolbens 242, die potenziell zur Anlage an eine entsprechende Zylinderwand gelangen kann.

Erfindungsgemäß ist in den Kolben 242 ferner eine Aussparung 250, insbesondere eine umlaufende Aussparung, eingebracht, die zur Aufnahme eines Schmierstoffdepots 252 dient. Das Schmierstoffdepot 252 kann durch ein Schmiermittel gebildet sein bzw. einen mit einem Schmiermittel getränkten oder benetzten Schmiermittelträger umfassen. Da der Abstand 248 zwischen den Ringnuten 244, 246 hinreichend groß gewählt ist, kann ein Schmierstoffdepot 252 mit einer beträchtlichen Längenerstreckung in die Aussparung 240 eingebracht werden. Auf diese Weise kann eine hinreichend große Schmiermittelmenge direkt in den Kolben 242 integriert werden. Demgemäß ist eine integrierte Schmiermittelversorgung ermöglicht.

Abweichend von der in FIG. 32 gezeigten Ausgestaltung des Kolbens 242 wäre es ggf. auch vorstellbar, beim Kolben 242 auf die Ringnuten 244, 246 zu verzichten und das Schmierstoffdepot 252 selbst als Dichtelement zur Abdichtung zwischen einer Außenwandung des Kolbens 242 und dem entsprechenden Zylinder 204 auszuführen. Dies wäre etwa dann vorstellbar, wenn das Schmierstoffdepot 252 bzw. ein beim Schmierstoffdepot 252 vorgesehenes Trägermaterial für ein Schmiermittel zumindest teilweise elastisch bzw. deformierbar ausgestaltet ist. Auf diese Weise kann etwa das Schmierstoffdepot 252 im Vergleich zu einem Durchmesser des Zylinders 204 ein "Übermaß" aufweisen und somit mit leichter Vorspannung im Zylinder 204 geführt sein. Auf diese Weise lässt sich einerseits eine gute Abdichtung bewirken, die die Erzeugung hoher Drücke erlaubt. Ferner kann der Verschleiß zwischen dem Kolben 242 und dem Zylinder 204 minimiert werden.

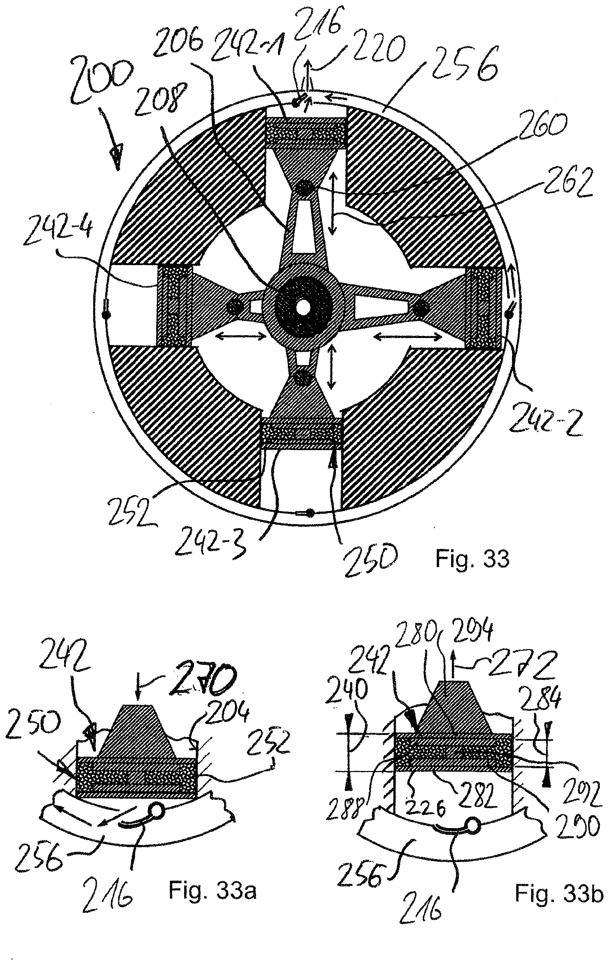

Mit besonderem Verweis auf die FIG. 33, 33a und 33b wird eine beispielhafte Ausgestaltung einer weiteren Ausführungsform eines Kolbenkompressors veranschaulicht. Der Kolbenkompressor ist in den FIG. 33, 33a, 33b schematisch stark vereinfacht anhand von Prinzipdarstellungen abgebildet. Bei dem Kolbenkompressor 200 handelt es sich beispielhaft um einen Kompressor, der vier oder ein ganzzahliges Vielfaches von vier Kolben-Zylinder-Paarungen umfasst. In FIG. 33 sind insgesamt vier sternförmig angeordnete Kolben 242-1, 242-2, 242-3 und 242-4 und entsprechende Zylinder 204 angeordnet. Es versteht sich, dass die Kolben 242-1, 242-2, 242-3, 242-4 nicht notwendigerweise in ein und derselben Ebene (aus Sicht des Betrachters von FIG. 33) angeordnet sein müssen. Vielmehr können diese senkrecht zur Ansichtsebene der FIG. 33 zueinander versetzt angeordnet sein.

In grundsätzlich bekannter Weise sind die Kolben 242 jeweils über ein Pleuel 206 exzentrisch an einer Welle 208 aufgenommen (in FIG. 33) nicht detailliert dargestellt). Zur Kopplung zwischen den Kolben 242 und den Pleueln 206 ist jeweils ein Kolbenbolzen 260 vorgesehen. Ein mit 262 bezeichneter Doppelpfeil veranschaulicht die längsoszillatorische Bewegung des Kolbens 242-1, die durch entsprechende Drehungen der Antriebswelle 208 erzeugbar ist. Demgemäß kann jeder der Kolben 242-1, 242-2, 242-3, 242-4 entsprechende Ansaugbewegungen und Druckbewegungen vollführen. Jeder der Kolben 242-1, 242-2, 242-3, 242-4 kann ferner mit entsprechenden Ventilen 214, 216 (vgl. FIG. 30) gekoppelt sein, von denen in FIG. 33 beispielhaft lediglich die Auslassventile 216 explizit dargestellt sind. Die Auslassventile 216 können beispielhaft als Klappenventile oder Schwenkventile gestaltet sein, vgl. insbesondere FIG. 33a und FIG. 33b. Während einer Ansaugbewegung des Kolbens 242 (vgl. Bezugszeichen 272 in FIG. 33b) ist das entsprechende Auslassventil 216 geschlossen. Demgemäß kann während der Ansaugbewegung ein entsprechendes Einlassventil 214 geöffnet sein, das in den FIG. 33, 33a, 33b jedoch nicht explizit dargestellt ist. Eine der Ansaugbewegung 272 entgegengerichtete Kompressionsbewegung wird in FIG. 33a durch ein mit 270 bezeichneten Pfeil veranschaulicht.

Ein komprimiertes Fluid, insbesondere komprimierte Luft, kann demgemäß durch das Auslassventil 216 hindurch in einen Kanal oder Strömungskanal 256 gedrängt werden. Die komprimierte Luft bzw. das komprimierte Fluid kann den Kompressor 200 über einen Auslass 220 verlassen. Die in FIG. 33 gezeigten Kolben 242-1, 242-2, 242-3- 242-4 können zueinander versetzt bzw. winkelmäßig versetzt zueinander angeordnet sein, so dass sich während einer Umdrehung der Antriebswelle 208 zeitlich gestaffelte Ansaugvorgänge bzw. Kompressionsvorgänge ergeben können. Auf diese Weise können am Auslass 220 übermäßig starke Druckschwankungen vermieden werden. Ähnlich der anhand der FIG. 32 veranschaulichten Ausgestaltung des Kolbens 242 weist auch der Kolben 242 gemäß den FIG. 33, 33a und 33b eine Aussparung 250 auf, die zur Aufnahme eines Schmierstoffdepots 252 in einen Umfang des Kolbens 242 eingebracht ist. Auf diese Weise kann auch bei den Ausführungsformen des Kolbens 242 gemäß den Fig. 33, 33a, 33b eine integrierte Schmiermittelversorgung realisiert werden. Im Extremfall kann eine Lauffläche 242, also der Teil des Kolbenumfangs, der üblicherweise mit der Wand des Zylinders 204 in Kontakt treten kann, auf wenige scheibenförmige Abschnitte 280, 282 reduziert werden, zwischen denen sich das Schmierstoffdepot 252 erstreckt. Demgemäß kann das Schmierstoffdepot eine Höhe 284 aufweisen, die etwa zumindest 50 %, weiter bevorzugt zumindest 70 %, noch weiter bevorzugt zumindest 80 % einer wirksamen Höhe 240 der Lauffläche umfassen kann.

Die FIG. 33, 33a, 33b zeigen ferner, dass der Kolben etwa auch als sog. "gebauter" Kolben 242 gestaltet sein kann. Demgemäß wäre es vorstellbar, den Kolben 242 aus mehreren Einzelteilen zu fügen, etwa aus einer Mehrzahl scheibenförmiger Abschnitte 280, 282 sowie Platten 288, 290, die über einen Kern 292 miteinander verbunden sind. Ferner kann der Kolben 242 an seiner dem Kolbenboden 226 abgewandten Seite mit einem Träger 294 versehen sein, der zur Ankopplung an den Kolbenbolzen 260 bzw. das Pleuel 206 dient.

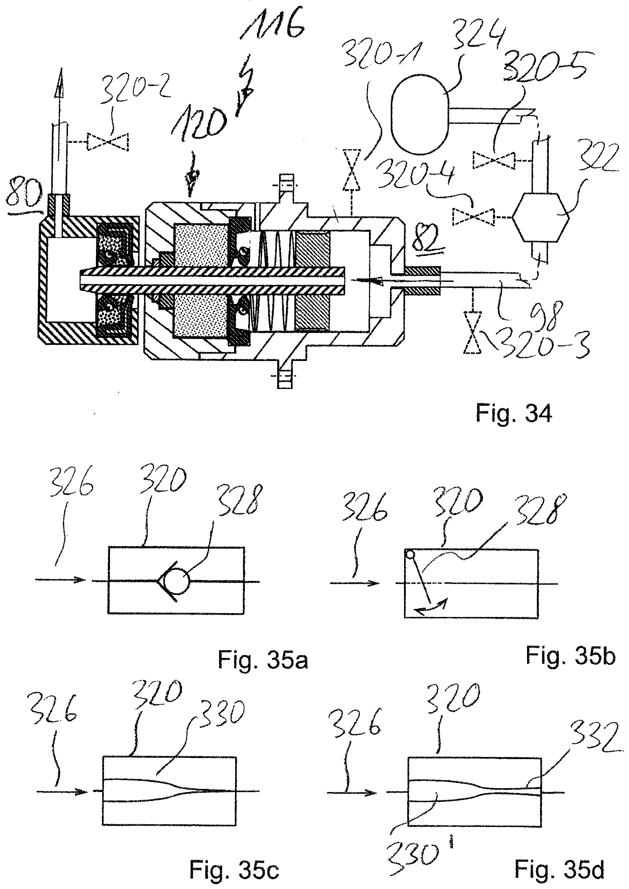

FIG. 34 zeigt eine schematische, stark vereinfachte Schnittansicht einer Ausführungsform eines Dreh-Fest-Übergangs 1 16 in einem Druckmittelpfad 98. Der Dreh-Fest-Übergang 1 16 führt den Druckmittelpfad 98 von einer Trägerseite 82 zu einer Radkörperseite 80. Der Dreh-Fest-Übergang 1 16 kann auch als Drehdurchführung bezeichnet werden. Der Dreh-Fest-Übergang 1 16 weist ein Koppelventil 120 auf, das einen Ventilkolben aufweist, der zwischen einer eingefahrenen Stellung und deiner ausgefahrenen Stellung verfahrbar ist, um den Druckmittelpfad 98 von der Trägerseite 82 zur Radkörperseite 80 auszubilden.

Druckmittel kann das Koppelventil 120 ausgehend von der Trägerseite 82 hin zur Radkörperseite 80 durchströmen. Das Druckmittel kann etwa durch einen Druckspeicher 324 oder einen Druckerzeuger (Kompressor) bereitgestellt werden. Das Druckmittel kann einen Verteilerblock 322 durchströmen, der z.B. einzelne Räder ansteuern kann. Es ist von Vorteil, im Druckmittelpfad 98 zumindest eine Druckabbauöffnung 320 anzuordnen. Die Druckabbauöffnung 320 erleichtert die Funktion des Koppelventils 120, insbesondere ein Rücksteilen des Ventilkolbens. Zu diesem Zweck wird eine definierte Leckage bzw. ein definierter Volumenstromverlust provoziert. Damit kann der Druck im Druckmittelpfad 98 abgebaut werden, auch wenn das Rad befüllt ist und eigentlich ein hoher Druck im Druckmittelpfad 98 herrschen müsste. Die Druckabbauöffnung 320 kann an verschiedenen Positionen im Druckmittelpfad ausgebildet bzw. an diesen angekoppelt sein, vgl. die Bezugszeichen 320-1, 320-2, 320-3, 320-4 und 320-5 in FIG. 34, die alternative Positionen beschreiben.

Die FIG. 35a bis 35d veranschaulichen beispielhafte Ausgestaltungen solcher Druckabbauöffnungen 320, die mit Sperrelementen 328, 330 versehen sind. In den FIG. 35a bis 35d ist eine Strömungsrichtung mit 326 bezeichnet. Die Druckabbauöffnungen 320 gemäß FIG. 35a und 35b sind mit Sperrelementen 328 in Form von Rückschlagventilen versehen. Somit kann das Druckmittel die Druckabbauöffnungen 320 grundsätzlich nur in einer Richtung durchströmen. FIG. 35a veranschaulicht beispielhaft ein Kugelsitzventil mit einer Sperrkugel. FIG. 35b veranschaulicht beispielhaft ein Klappenventil mit einer Sperrklappe.

Die FIG. 35c und 35d veranschaulichen ein tüllenartiges oder membranartiges Sperrelement 330 in einer geschlossenen Stellung (FIG. 35c) und einer geöffneten Stellung (FIG. 35d). Es versteht sich, dass auch die Gestaltung gemäß den FIG. 35c und 35d ein richtungsgebundenes Durchströmen erlaubt. Die Gestaltung der Druckabbauöffnungen 320 gemäß den FIG. 35a bis 35d erlaubt den gewünschten Druckabbau und verhindert gleichzeitig das Eindringen von Verschmutzungen in den Druckmittelpfad 98.

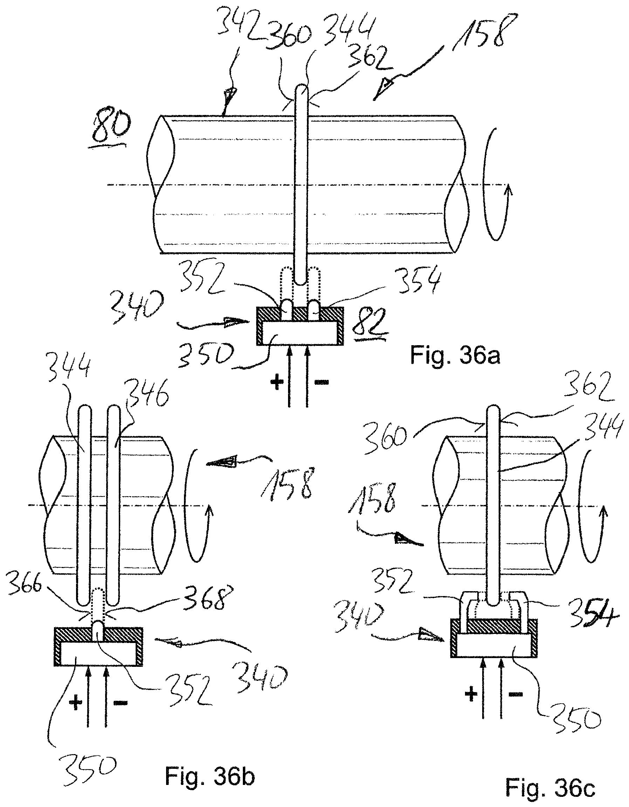

Die FIG. 36a, 36b und 36c veranschaulichen Gestaltungen von Dreh-Fest-Übergängen 158 für einen Energieversorgungspfad 106 einer Druckmittelversorgungseinrichtung 70. Grundsätzlich sind hierfür etwa Schleifkontakte denkbar. Den Dreh-Fest-Übergängen 158 ist jeweils eine Kontakteinheit 340 zugeordnet, die an der Trägerseite 82 aufgenommen ist. An der Radkörperseite 80 ist beispielhaft ein Rotor 342 aufgenommen. Der Rotor 342 weist jeweils einen oder mehrere Kontaktabschnitte 344, 346 auf, die insbesondere scheibenförmig gestaltet sind und sich radial vom Rotor 342 nach außen erstrecken.

Die Kontakteinheit 340 weist vorzugsweise einen Aktuator 350 auf, der etwa also Magnetaktor, als elektromotorischer Aktor oder dgl. gestaltet ist. Am Aktuator 350 kann zumindest ein Kontaktkörper 352, 354 aufgenommen sein, der in geeigneter Weise mit dem zumindest einen Kontaktabschnitt 344, 346 zusammenwirkt, um Energie zu übertragen, etwa zum Antrieb eines Kompressors zur Druckmittelerzeugung. Der zumindest eine Kontaktkörper 352, 354 kann durch den Aktor 350 zwischen einer NichtKontakt-Stellung und einer Kontaktstellung verlagert werden.

In FIG. 36a ist ein Kontaktabschnitt 344 vorgesehen, an dem zwei Kontaktflächen 360, 362 ausgebildet sind, die etwa einen Plus-Kontakt und einen Minus-Kontakt verkörpern. Der Kontaktabschnitt 344 kann durch die Kontaktkörper 352, 354 des Aktuators 350 bzw. der Kontakteinheit 340 kontaktiert werden. Die Kontaktkörper 352, 354 können in einer ausgefahrenen Stellung zwischen sich den Kontaktabschnitt 344 aufnehmen, um die Kontaktflächen 360, 362 gezielt zu kontaktieren.

In FIG. 36b ist ein Kontaktkörper 352 vorgesehen, an dem zwei Anlagefläche 366, 368 ausgebildet sind, die etwa einen Plus-Kontakt und einen Minus-Kontakt verkörpern. Der Kontaktkörper 352 kann in einer ausgefahrenen Stellung zwei Kontaktabschnitte 344, 346 kontaktieren, um elektrische Energie zu übertragen. In den FIG. 36a und 36b erfolgt die Bewegung des zumindest einen Kontaktkörper 352, 354 radial in Richtung auf den Rotor. In FIG. 36c ist der Aktuator 350 dazu ausgebildet, die Kontaktkörper 352, 354 axial zu verlagern bzw. derart zu verschwenken, dass diese den Kontaktabschnitt 344 an den voneinander abgewandten Kontaktflächen 360, 362 axial kontaktieren.

In den FIG. 36a bis 36c ist die ausgefahrene Stellung der Kontaktkörper 352, 354 jeweils gestrichelt angedeutet. Es ist von Vorteil, wenn keine separaten Steuerleitungen für den Aktuator 350 vorgesehen sind. Mit anderen Worten kann der Aktuator 350 aktiviert bzw. betätigt werden, indem der Energieversorgungspfad 106 als solches bestromt wird.

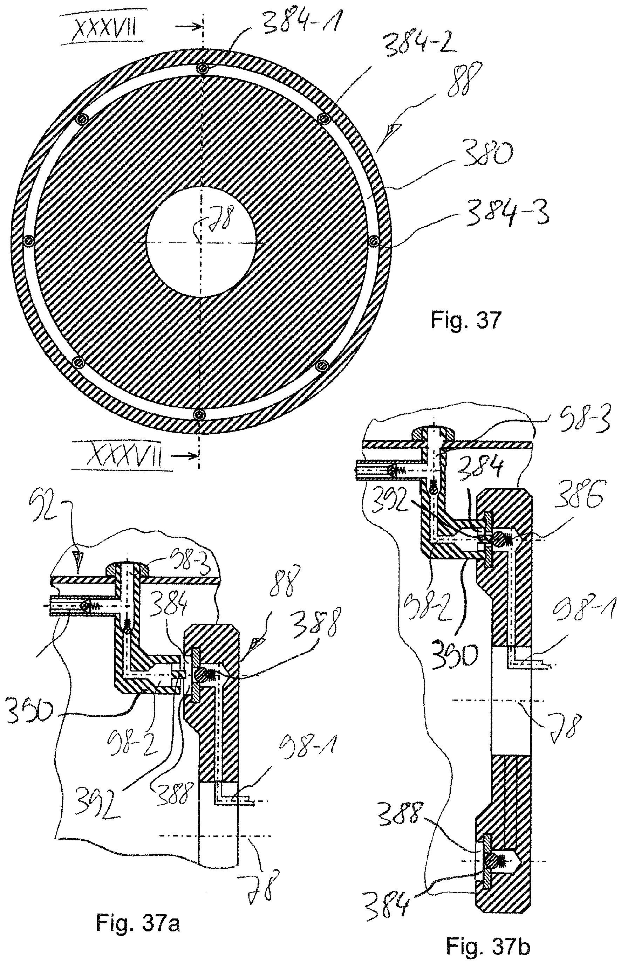

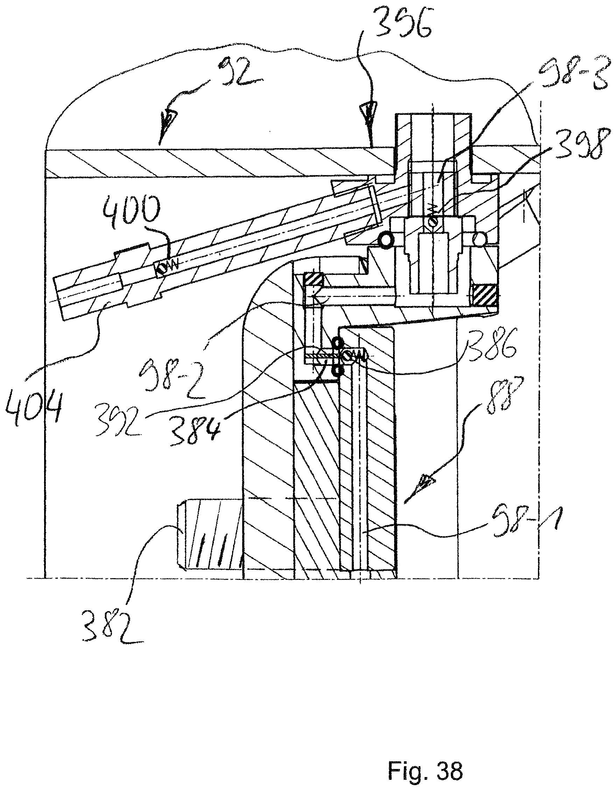

FIG. 37 zeigt eine schematische, stark vereinfachte frontale Schnittansicht einer Ausgestaltung eines mit einem Ringkanal 380 versehenen Nabenkörpers 88 für eine Druckmittelversorgungseinrichtung 70. FIG. 37a, 37b zeigen korrespondierende seitliche Schnitte durch eine Anordnung gemäß FIG. 37. Fig. 38 zeigt einen Schnitt durch eine alternative Ausgestaltung einer Druckmittelversorgungseinrichtung 70 in Teildarstellung. In FIG. 38 ist mit 382 ein Radbolzen bzw. eine Radschraube angedeutet, mit denen der Felgenkörper 92 am Nabenkörper 88 fixiert werden kann. Dies erfolgt üblicherweise in bestimmten Vorzugsorientierungen. Der Ringkanal 380 erlaubt eine Anpassung der Druckmittelversorgungseinrichtung 70 an diese Vorzugsorientierungen, insbesondere an relative Drehorientierungen zwischen dem Felgenkörper 92 und dem Nabenkörper 88.

Im Ringkanal 380 ist eine Mehrzahl von Anschlüssen 384-1, 384-2, 384-3 angeordnet, die vorzugsweise an die Anzahl und Lage der Radbolzen 382 angepasst sind. Die Anschlüsse 384 weisen vorzugsweise Sperrelemente oder Rückschlagsperren 386 auf, die den jeweiligen Anschluss versperren, solange kein Felgenkörper 92 montiert ist. Die Anschlüsse 384 weisen ferner Orientierungshilfen oder Lagesicherungselemente auf, etwa Vertiefungen oder Aufnahmen 388. Wird nun ein Rad mit dem Felgenkörper 92 montiert, so ist daran ein steckerartiges Kontaktelement 390 ausgebildet, dass in einen der Anschlüsse 384 eingreifen kann. FIG. 37a veranschaulicht einen Annäherungszustand, in dem noch kein unmittelbarer Kontakt erfolgt ist. FIG. 37b veranschaulicht einen montierten Zustand. FIG. 38 veranschaulicht ebenso einen montierten Zustand.

Am Kontaktelement 390 ist ein Pin oder Schaft 392 angeordnet, der dazu ausgebildet ist, im montierten Zustand derart an eine Rückschlagsperre 386 anzugreifen, dass der betroffene Anschluss 384 geöffnet ist. Alle anderen Anschlüsse sind weiterhin geschlossen, da kein Pin 392 die entsprechende Rückschlagsperre 386 öffnet.

Den FIG. 37a, 37b und 38 ist entnehmbar, dass die Druckmittelversorgungseinrichtung 70 weiterhin ein konventionelles Befüllen des Rades erlaubt. Zu diesem Zweck ist eine Y-artige Weiche 396 vorgesehen, einen Schenkel, der der Druckmittelversorgungseinrichtung 70 bzw. dem Fluidpfad 98 zugeordnet ist, und einen anderen Schenkel aufweist, der mit einem konventionellen Ventil 404 für die externe Befüllung gekoppelt ist. Entsprechende Rückschlagsperren 398, 400 erlauben ein Aktivieren oder Deaktivieren der jeweiligen Schenkel der Weiche 396 ohne Zusatzaufwand. Somit ist ein Notbetrieb unter Umgehung der Druckmittelversorgungseinrichtung 70 erlaubt.

## Patentansprüche

1. Dezentrale integrierte Druckmittelversorgungseinrichtung (70), insbesondere zur Druckluftversorgung, für eine Radeinheit (14) mit einem drehbar gelagerten Fahrzeugreifen (16), mit einer dezentralen Verdichtereinheit (74), insbesondere einer elektromotorisch antreibbaren Verdichtereinheit (74), und mit einem Druckmittelpfad (98), der sich zwischen der dezentralen Verdichtereinheit (74) und einem Felgenkörper (92) des Fahrzeugreifens (16) erstreckt, der einer Radkörperseite (80) der Radeinheit (14) zugeordnet ist, wobei die dezentrale Verdichtereinheit (74) einen Energieversorgungsanschluss (126) aufweist, der über einen Energieversorgungspfad (106) versorgbar ist, der mit einer Energiebereitstellungseinheit (104) koppelbar ist, wobei die Druckmittelversorgungseinrichtung (70) zumindest abschnittsweise einer Trägerseite (82) und der Radkörperseite (80) der Radeinheit (14) zugeordnet ist, und wobei zumindest der Druckmittelpfad (98) oder der Energieversorgungspfad (106) einen Dreh-Fest-Übergang (116, 158), insbesondere eine Drehdurchführung, zwischen der Trägerseite (82) und der Radkörperseite (80) umfasst,
**dadurch gekennzeichnet, dass**
die Verdichtereinheit (74) einen Kompressor und einen Motor (118) aufweist, die insbesondere in ein gemeinsames Gehäuse integriert sind, wobei der Kompressor (200) zumindest einen Kolben (242) aufweist, wobei der Kolben (242) an seiner Lauffläche mit einer Aussparung (250) versehen ist, insbesondere mit einer sich umfänglich erstreckenden Aussparung (250), die ein Schmierstoffdepot (252) beherbergt.

2. Druckmittelversorgungseinrichtung (70) nach Anspruch 1,
wobei das Schmierstoffdepot (252) im montierten Zustand in direktem Kontakt mit einer Wandung eines Zylinders (204) steht.

3. Druckmittelversorgungseinrichtung (70) nach Anspruch 1 oder 2,
wobei die Aussparung (250) zwischen einer ersten Nut (244) und einer zweiten Nut (246) für Kolbenringe angeordnet ist, wobei die Nuten (244, 246) einen Abstand (248) zueinander aufweisen, der vorzugsweise zumindest 25 %, weiter bevorzugt zumindest 40 %, noch weiter bevorzugt zumindest 50 % einer Gesamtlänge (240) der Lauffläche des Kolbens (242) umfasst.

4. Druckmittelversorgungseinrichtung (70) nach einem der Ansprüche 1 bis 3, wobei die Aussparung (250) an der Lauffläche des Kolbens (242) eine Längserstreckung (284) aufweist, die zumindest 30 %, weiter bevorzugt zumindest 50 %, noch weiter bevorzugt zumindest 60 %, einer Gesamtlänge (240) der Lauffläche des Kolbens (242) umfasst.

5. Druckmittelversorgungseinrichtung (70) nach einem der Ansprüche 1 bis 4, wobei der Dreh-Fest-Übergang (116) im Druckmittelpfad (98) ausgebildet ist, und wobei die Verdichtereinheit (74) an der Trägerseite (82) festgelegt ist.

6. Druckmittelversorgungseinrichtung (70) nach einem der Ansprüche 1 bis 5, wobei der Dreh-Fest-Übergang (116) im Druckmittelpfad (98) eine fluidische Drehdurchführung umfasst.

7. Druckmittelversorgungseinrichtung (70) nach Anspruch 5 oder 6,
wobei der Dreh-Fest-Übergang (116) zwischen einem aktivierten Zustand und einem deaktivierten Zustand umschaltbar ist, und wobei sich insbesondere im aktivierten Zustand ein Kontakt zwischen einer feststehenden Komponente und einer rotierbaren Komponente des Dreh-Fest-Übergangs (116) ergibt.

8. Druckmittelversorgungseinrichtung (70) nach einem der Ansprüche 5 bis 7, wobei der Dreh-Fest-Übergang (116) in Abhängigkeit von einem anliegenden Druck des Druckmittels schaltbar ist.

9. Druckmittelversorgungseinrichtung (70) nach einem der Ansprüche 5 bis 8, wobei der Dreh-Fest-Übergang (116) koaxial zu einer Radachse (78) der Radeinheit (14) angeordnet ist.

10. Druckmittelversorgungseinrichtung (70) nach einem der Ansprüche 5 bis 8, wobei der Dreh-Fest-Übergang (116) außermittig, insbesondere exzentrisch zu einer Radachse (78) der Radeinheit (14) angeordnet ist.

11. Druckmittelversorgungseinrichtung (70) nach einem der Ansprüche 1 bis 10,
wobei im Druckmittelpfad (98) ferner ein Koppelventil (124) vorgesehen ist, das insbesondere zwischen dem Nabenkörper (88) und dem Felgenkörper (92) ein Trennen des Druckmittelpfades (98) ermöglicht.

12. Radeinheit (14) für ein Fahrzeug (10), die einen Achskörper (84) und einen Felgenkörper (92) mit einem Reifen (16) aufweist, wobei der Felgenkörper (92) mit dem Achskörper (84) gekoppelt und insbesondere drehbar am Achskörper (84) gelagert ist, wobei die Radeinheit (14) ferner eine integrierte Druckmittelversorgungseinrichtung (70) nach einem der Ansprüche 1 bis 11 aufweist.

13. Radeinheit (14) nach Anspruch 12, ferner aufweisend einen Drucksensor (114), der radkörperseitig angeordnet ist und dazu ausgestaltet ist, einen Fluiddruck im Reifen (16) zu überwachen, wobei der Drucksensor (114) vorzugsweise dazu ausgestaltet ist, den erfassten Fluiddruck an eine Reifendruckregeleinheit (60) zu übermitteln.

14. Verteiltes System (54) zur Druckmittelversorgung, insbesondere zur Druckluftversorgung bei einem Fahrzeug (10), das eine Mehrzahl von Radeinheiten (14) aufweist, die insbesondere paarweise zumindest einer Achse (12) zugeordnet sind, wobei zumindest einige der Radeinheiten (14) mit einer integrierten Druckmittelversorgungseinrichtung (70) nach einem der Ansprüche 1 bis 11 versehen sind, wobei das System (54) eine Reifendruckregeleinheit (60) aufweist, die dazu ausgebildet ist, die Verdichtereinheit (74) der jeweiligen Druckmittelversorgungseinrichtung (70) selektiv zu aktivieren.

## Claims

1. A decentralized, integrated pressurized-medium supply device (70), in particular for the supply of compressed air, for a wheel unit (14), with a rotatably mounted vehicle tire (16), with a decentralized compressor unit (74), in particular an electromotively driven compressor unit (74), and with a pressurized medium path (98) extending between the decentralized compressor unit (74) and a rim body (92) of the vehicle tire (16) and associated with a wheel body side (80) of the wheel unit (14), wherein the decentralized compressor unit (74) comprises a power supply terminal (126) that can be supplied via a power supply path (106) and coupled to a power provision unit (104), wherein the pressurized-medium supply device (70) is associated at least in sections with a carrier side (82) and the wheel body side (80) of the wheel unit (14), and wherein at least the pressurized-medium path (98) or the power supply path (106) comprises a rotational-to-fixed transition (116, 158), in particular a rotary feedthrough, between the carrier side (82) and the wheel body side (80), **characterized in that**
the compressor unit (74) comprises a compressor and a motor (118), which are in particular integrated into a common housing, wherein the compressor (200) comprises at least one piston (242), wherein the piston (242) is equipped with a recess (250) on its tread,
in particular with a recess (250) extending circumferentially and accommodating a lubricant reservoir (252) .

2. The pressurized-medium supply device (70) according to claim 1,
wherein, in the assembled state, the lubricant reservoir (252) is in direct contact with a wall of a cylinder (204).

3. The pressurized-medium supply device (70) according to claim 1 or 2,
wherein the recess (250) is arranged between a first groove (244) and a second groove (246) for piston rings, wherein the grooves (244, 246) have a distance (248) to one another that is preferably at least 25%, further preferably at least 40%, even more preferably at least 50% of an overall length (240) of the tread of the piston (242).

4. The pressurized-medium supply device (70) according to any one of claims 1 to 3,
wherein the recess (250) on the tread of the piston (242) has a longitudinal extension (284) that is at least 30%, further preferably at least 50%, even more preferably at least 60% of an overall length (240) of the tread of the piston (242).

5. The pressurized-medium supply device (70) according to any one of claims 1 to 4,
wherein the rotational-to-fixed transition (116) is formed in the pressurized-medium path (98), and wherein the compressor unit (74) is fixed on the carrier side (82).

6. The pressurized-medium supply device (70) according to any one of claims 1 to 5,
wherein the rotational-to-fixed transition (116) in the pressurized-medium path (98) comprises a fluid rotary feedthrough.

7. The pressurized-medium supply device (70) according to claim 5 or 6,
wherein the rotational-to-fixed transition (116) is switchable between an activated state and a deactivated state, and wherein, in particular in the activated state, there is contact between a fixed component and a rotatable component of the rotational-to-fixed transition (116).

8. The pressurized-medium supply device (70) according to any one of claims 5 to 7,
wherein the rotational-to-fixed transition (116) is switchable as a function of a given pressure of the pressurized medium.

9. The pressurized-medium supply device (70) according to any one of claims 5 to 8,
wherein the rotational-to-fixed transition (116) is arranged coaxially to a wheel axle (78) of the wheel unit (14) .

10. The pressurized-medium supply device (70) according to any one of claims 5 to 8,
wherein the rotational-to-fixed transition (116) is arranged off-center, in particular eccentrically to a wheel axle (78) of the wheel unit (14).

11. The pressurized-medium supply device (70) according to any one of claims 1 to 10,
wherein a coupling valve (124) is further provided in the pressurized-medium path (98), which in particular allows the pressurized-medium path (98) to be separated between the hub body (88) and the rim body (92).

12. A wheel unit (14) for a vehicle (10) having an axle body (84) and a rim body (92) with a tire (16), wherein the rim body (92) is coupled to the axle body (84) and in particular is rotatably supported on the axle body (84), wherein the wheel unit (14) further comprises an integrated pressurized-medium supply device (70) according to any one of claims 1 to 11.

13. The wheel unit (14) according to claim 12, further comprising a pressure sensor (114) arranged on the wheel body side and configured so as to monitor a fluid pressure in the tire (16), wherein the pressure sensor (114) is preferably configured so as to transmit the sensed fluid pressure to a tire pressure control unit (60).

14. A distributed system (54) for the supply of pressurized medium, in particular for supplying compressed air to a vehicle (10), having a plurality of wheel units (14), which are in particular associated in pairs with at least one axle (12), wherein at least some of the wheel units (14) are equipped with an integrated pressurized-medium supply device (70) according to any one of the claims 1 to 11, wherein the system (54) comprises a tire pressure control unit (60), which is configured so as to selectively activate the compressor unit (74) of the respective pressurized-medium supply device (70).

## Revendications

1. Dispositif d'alimentation en moyen de pression intégré (70), décentralisé, en particulier pour l'alimentation en air comprimé, pour une unité de roue (14), avec un pneu de véhicule monté de manière rotative (16), avec une unité de compresseur décentralisée (74), en particulier une unité de compresseur entraînée par moteur électrique (74), et avec un chemin de moyen de pression (98) s'étendant entre l'unité de compresseur décentralisée (74) et un corps de jante (92) du pneu de véhicule (16) et associée à un côté de corps de roue (80) de l'unité de roue (14), dans lequel l'unité de compresseur décentralisée (74) comprend une borne d'alimentation électrique (126) qui peut être fournie via un chemin d'alimentation électrique (106) et couplée à une unité d'alimentation électrique (104), dans lequel le dispositif d'alimentation en moyen de pression (70) est associé au moins par sections à un côté de support (82) et au côté de corps de roue (80) de l'unité de roue (14), et dans lequel au moins le chemin de moyen de pression (98) ou le chemin d'alimentation électrique (106) comprend une transition de rotation à fixe (116, 158), en particulier une traversée rotative, entre le côté porteur (82) et le côté de corps de roue (80),
**caractérisé en ce que**
l'unité de compresseur (74) comprend un compresseur et un moteur (118), qui sont en particulier intégrés dans un logement commun, dans lequel le compresseur (200) comprend au moins un piston (242), dans lequel le piston (242) est équipé d'un évidement (250) sur sa bande de roulement,
en particulier avec un évidement (250) s'étendant circonférentiellement et logeant un réservoir de lubrifiant (252) .

2. Dispositif d'alimentation en moyen de pression (70) selon la revendication 1,
dans lequel, dans l'état assemblé, le réservoir de lubrifiant (252) est en contact direct avec une paroi d'un cylindre (204).

3. Dispositif d'alimentation en moyen de pression (70) selon la revendication 1 ou 2,
dans lequel l'évidement (250) est agencé entre une première rainure (244) et une deuxième rainure (246) pour des segments de piston, dans lequel les rainures (244, 246) ont une distance (248) l'une par rapport à l'autre qui est de préférence d'au moins 25 %, plus préférablement d'au moins 40 %, encore plus préférablement d'au moins 50 % d'une longueur totale (240) de la bande de roulement du piston (242) .

4. Dispositif d'alimentation en moyen de pression (70) selon l'une quelconque des revendications 1 à 3,
dans lequel l'évidement (250) sur la bande de roulement du piston (242) a une extension longitudinale (284) qui est d'au moins 30 %, plus préférablement d'au moins 50 %, encore plus préférablement d'au moins 60 % d'une longueur totale (240) de la bande de roulement du piston (242).

5. Dispositif d'alimentation en moyen de pression (70) selon l'une quelconque des revendications 1 à 4,
dans lequel la transition de rotation à fixe (116) est formée dans le chemin de moyen de pression (98), et dans lequel l'unité de compresseur (74) est fixée sur le côté porteur (82).

6. Dispositif d'alimentation en moyen de pression (70) selon l'une quelconque des revendications 1 à 5,
dans lequel la transition de rotation à fixe (116) dans le chemin de moyen de pression (98) comprend une traversée rotative de fluide.

7. Dispositif d'alimentation en moyen de pression (70) selon la revendication 5 ou 6,
dans lequel la transition de rotation vers fixe (116) peut être commutée entre un état activé et un état désactivé, et dans lequel, en particulier dans l'état activé, il y a un contact entre un élément fixe et un élément rotatif de la transition de rotation à fixe (116).

8. Dispositif d'alimentation en moyen de pression (70) selon l'une quelconque des revendications 5 à 7,
dans lequel la transition de rotation à fixe (116) est commutable en tant que fonction d'une pression donnée du moyen de pression.

9. Dispositif d'alimentation en moyen de pression (70) selon l'une quelconque des revendications 5 à 8,
dans lequel la transition de rotation à fixe (116) est agencée coaxialement à un essieu de roue (78) de l'unité de roue (14).

10. Dispositif d'alimentation en moyen de pression (70) selon l'une quelconque des revendications 5 à 8,
dans lequel la transition de rotation à fixe (116) est agencée de manière décentrée, en particulier de manière excentrée par rapport à un essieu de roue (78) de l'unité de roue (14).

11. Dispositif d'alimentation en moyen de pression (70) selon l'une quelconque des revendications 1 à 10,
dans lequel une soupape de couplage (124) est en outre fournie dans le chemin de moyen de pression (98), ce qui permet en particulier au chemin de moyen de pression (98) d'être séparé entre le corps de moyeu (88) et le corps de jante (92).

12. Unité de roue (14) pour un véhicule (10) ayant un corps d'essieu (84) et un corps de jante (92) avec un pneu (16), dans laquelle le corps de jante (92) est couplé au corps d'essieu (84) et en particulier est supporté de manière rotative sur le corps d'essieu (84), dans laquelle l'unité de roue (14) comprend en outre un dispositif d'alimentation en moyen de pression intégré (70) selon l'une quelconque des revendications 1 à 11.

13. Unité de roue (14) selon la revendication 12, comprenant en outre un capteur de pression (114) agencé sur le côté du corps de roue et configuré de manière à surveiller une pression de fluide dans le pneu (16), dans laquelle le capteur de pression (114) est de préférence configuré de manière à transmettre la pression de fluide détectée à une unité de commande de pression de pneu (60).

14. Système distribué (54) pour l'alimentation en moyen de pression, en particulier pour la fourniture d'air comprimé à un véhicule (10), ayant une pluralité d'unités de roues (14), qui sont en particulier associés par paires à au moins un essieu (12), dans lequel au moins certaines parmi les unités de roue (14) sont équipées d'un dispositif d'alimentation en moyen de pression intégré (70) selon l'une quelconque des revendications 1 à 11, dans lequel le système (54) comprend une unité de commande de pression de pneu (60), qui est configurée de manière à activer sélectivement l'unité de compresseur (74) du dispositif d'alimentation en moyen de pression respectif (70).
